# EUROPÄISCHE PATENTSCHRIFT

(11) **EP 0 543 312 B1**
(45) Veröffentlichungstag und Bekanntmachung des Hinweises auf die Patenterteilung: **10.01.1996**
(21) Anmeldenummer: 92119563.2
(22) Anmeldetag: 16.11.1992
(51) Int. Cl.: A01D 82/00

(54) **Verfahren zur Aufbereitung von im selben oder in einem vorangegangenen Arbeitsgang gemähtem, zusammengeschwadetem Halm- oder Blattgut und Aufbereitungsmaschine zur Durchführung dieses Verfahrens**
Method of processing stalk or leaf crop mown and swathed in the same or a previous process, and processing machine for carrying out this method
Procédé de conditionnement de produits de tiges ou de feuilles fauchés et andainés dans la même opération ou avant, et machine de conditionnement pour exécuter ce procédé

(30) Priorität: 22.11.1991 DE 4138358; 22.11.1991 DE 4138359; 22.11.1991 DE 4138360; 04.04.1992 DE 4211332
(43) Veröffentlichungstag der Anmeldung: 26.05.1993
(73) Patentinhaber: Maschinenfabriken Bernard Krone GmbH, D-48480 Spelle (DE)
(72) Erfinder: Krone, Bernard, W-4441 Spelle (DE); Kreienbaum, Hubert, W-4424 Stadtlohn (DE); Ahler, Wilhelm, W-4424 Stadtlohn (DE); Baumann, Georg, W-7988 Wangen (DE)

(56) Entgegenhaltungen:
- EP-A- 0 415 380
- DE-A- 3 537 958
- DE-A- 3 939 618
- DE-A- 3 940 673
- DE-C- 274 748
- US-A- 3 300 953
- SOVIET INVENTIONS ILLUSTRATED Section PQ, Week 8604, Derwent Publications Ltd., London, GB; Class P, AN 86-027293

## Beschreibung

Es handelt sich um ein Verfahren zur Aufbereitung von Halm- oder Blattgut, welches eine Tagessilage ermöglichen soll und um eine Aufbereitungsmaschine, mit der das Verfahren durchführbar ist. Das Halm- bzw. Blattgut ist vor der Aufbereitung zu mähen, was in einem Arbeitsgang gemeinsam mit der Aufbereitung erfolgen kann oder aber bereits vorher erfolgte. Ausgangspunkt des Verfahrens ist also eine zu mähende Fläche oder eine Fläche, die mit Mähschwaden üblicher Breite, die etwa 40% bis 60% der Mähbreite beträgt, belegt ist.

Es sind Verfahren und entsprechende Maschinen zur Halmgutaufbereitung bekannt, wobei aber weitere Verfahrensschritte bzw. Maschinen erforderlich sind, um eine Tagessilage, also das Einbringen von Siliergut in ein Silo noch am Tage des Mähens, zu erreichen.

Bei den bekannten Verfahren und Aufbereitungsmaschinen ist es üblich, nach der Aufbereitung des Halmgutes durch Beschädigen der Kutikula der Halme und Blätter wiederum einen Schwad bzw. eine Halmgutmatte von ungefähr Mähschwadbreite abzulegen.

Ein solches Verfahren ist beispielsweise in den Patentanmeldungen DE 40 33 879 A1, DE 41 13 630 A1 und DE 41 13 631 A1 beschrieben, wobei hier die Halmgutaufbereitung in sehr vorteilhafter Weise vorgenommen wird, aber nur bis zu maximal 60 % der vorhergehend gemähten Fläche mit aufbereitetem Halmgut belegt wird. Dadurch ist nur unter optimalen Bedingungen die Erreichung einer Tagessilage möglich. Oftmals ist aber die erreichte Trocknungstiefe nicht ausreichend und ein Breitstreuen bzw. Wenden des aufbereiteten Halmgutes mit herkömmlichen Heuwerbungsmaschinen wird erforderlich, was Verluste zur Folge hat.

Bei anderen bekannten Verfahren zur Halmgutaufbereitung wird die Halmgutschicht ebenfalls in einer Breite, die etwa der Mähschwadbreite entspricht, innerhalb einer Aufbereitungszone bearbeitet. Dabei kommen vorrangig Aufbereitungswalzen mit verschiedensten Oberflächen zur Anwendung, die das Halmgut quetschen oder reiben. Der Aufbereitungseffekt ist als weniger gut einzuschätzen als bei der Aufbereitung durch fast vollflächige Beaufschlagung des Halmgutes mit Hammerschlägen nach der Patentanmeldung DE 40 33 879 A1. Eine Tagessilage ist bei Aufbereitungsmaschinen dieser Art daher kaum erreichbar.

Die Vorteile der Ablage einer Halmgutmatte aus aufbereitetem Erntegut sind bekannt und bestehen vor allem in der Verringerung von Verlusten, da kleine Halmgutteile nicht zwischen die Stoppeln fallen, sondern in der Matte gehalten werden. Des weiteren kann kein Sonnenlicht durch die Halmgutmatte hindurch auf den Erdboden auftreffen und dort Wasserverdunstungen bewirken, die zur Anreicherung der Luft (und damit des Erntegutes) mit Feuchtigkeit führen würden.
Die genannten Tatsachen sind die Ursache dafür, daß ein Verfahren bzw. eine Maschine nach der DE 27 53 102 A1 nicht die gewünschten Effekte erreicht. Es handelt sich hier um eine Mähmaschine, von der ein Mähschwad gebildet wird, welcher einer Aufbereitungseinheit zugeführt und anschließend aufbereitet auf der Feldfläche abgelegt wird. Im Heckanbau an der Maschine ist eine Heuwerbungsmaschine vorgesehen, durch die das aufbereitete Erntegut im selben Arbeitsgang auf der Feldfläche verteilbar ist, wobei hier noch zwischen verschiedenen Schwadformen gewählt werden kann. Dabei werden kleine Halmgutteile förmlich in die Stoppeln eingearbeitet und sind nicht mehr zu bergen.
Bei einem anderen bekannten Verfahren bzw. der dazugehörigen Maschine nach der DE 39 40 673 A1 ist zwar eine Mattenablage des aufbereiteten Erntegutes realisiert worden, aber auch hier werden nur maximal 60 % der vorhergehend gemähten Fläche mit Erntegutmatten belegt.
Bei dieser selbstfahrenden Aufbereitungsmaschine ist ein Pufferraum und ein Dosierorgan für das aufbereitete Erntegut vorgesehen, wodurch erreicht werden soll, daß abschließend eine Erntegutmatte nahezu konstanter Dikke, nicht aber konstanter Breite gebildet wird. Es sind ein Mähwerk, eine Einzugsschnecke, welche das Mähgut zu einem schmalen Schwad zusammenfördert, ein Förderband und eine Aufbereitungsanordnung vorhanden. Hinter dieser Anordnung befindet sich der Pufferraum über einem Transportband und vor dem Dosierorgan. Die Schichtbreite des Erntegutstromes ist durch Führungsbleche über den Rändern des Transportbandes noch weiter verringerbar. In der Praxis bekannte Maschinen dieser Art legen Erntegutmatten von ca. 1,40 m Breite ab, wobei Mähbreiten von etwa 2,80 m bis 3,00 m vorliegen.

Bei der Maschine nach der DE 39 40 673 A1 sind hinter dem Dosierorgan Quetschwalzen vorgesehen, durch die das Erntegut verdichtet wird, wobei eine Matte gebildet wird, die über ein Ablageband auf der Feldfläche abzulegen ist. Der Antrieb der Quetschwalzen sowie des Ablagebandes erfolgt in Abhängigkeit vom Radantrieb der Maschine, also von ihrer Fahrgeschwindigkeit, so daß eine Mattenablage nur während der Fahrt erfolgt, wie dies auch bei dem Aufbereiter nach der DE 40 33 879 A1 der Fall ist. Diese Maschinen können damit im Stillstand nicht leergefahren werden, und es kommt zu Staubildungen innerhalb der Maschinen, wenn bei sehr langsamer Fahrt große Erntegutmengen aufzunehmen sind.

Es ist Aufgabe der Erfindung, ein unter Umständen mit dem Mähen von landwirtschaftlichem Erntegut kombinierbares Aufbereitungsverfahren und eine die Durchführung des Verfahrens ermöglichende Aufbereitungsmaschine zu entwickeln, wobei bekannte Aufbereitungsverfahren bzw. Aufbereitungsmaschinen so verbessert zur Anwendung kommen sollen, daß der Nutzeffekt aus der Sonnenenergie bezüglich der Halmguttrocknung größer wird. Dies soll mit minimalem Arbeits- und Zeitaufwand und bei geringen Verlusten erreicht werden. Durch die Aufbereitungsmaschine soll eine Mattenablage von aufbereitetem Erntegut realisiert werden, wobei diese fahrgeschwindigkeitsabhängig erfolgen soll. Die mattenbildenden Mittel sollen aber auch im Stillstand der Aufbereitungsmaschine oder bei Fahrt mit geringer Geschwindigkeit arbeiten, um Staubildungen innerhalb der Maschine zu vermeiden.

Zur Lösung dieser Aufgabe zeichnet sich das Verfahren zur Aufbereitung von im selben oder einem vorangegangenen Arbeitsgang gemähtem Halm- oder Blattgut durch die im kennzeichnenden Teil der Ansprüche 1 bis 4 angegebenen Merkmale aus. Die die Durchführung des Verfahrens ermöglichende Aufbereitungsmaschine ist charakterisiert durch den kennzeichnenden Teil des Anspruchs 5. Hinsichtlich weiterer Ausgestaltungen der Aufbereitungsmaschine wird auf die Ansprüche 6 bis 17 verwiesen.

Bei dem Verfahren nach der Erfindung wird davon ausgegangen, daß Halm- oder Blattgut durch eine Mähmaschine zu mähen ist, was in einem Arbeitsgang mit der Aufbereitung erfolgen kann oder aber bereits in einem vorangegangenen Arbeitsgang erfolgt ist. Die das schwadförmige Halmgut auf- oder übernehmende Aufbereitungsmaschine kann von einem landwirtschaftlichen Zugfahrzeug gezogen und angetrieben werden oder auch selbstfahrend ausgeführt sein. Die Breite der der Aufbereitungsmaschine zugeführten Erntegutschwaden beträgt etwa 40% bis 60% der Mähbreite. Diese Erntegutschwade sind von einem Zugfahrzeug gutschonend überfahrbar und auch einer selbstfahrenden Erntemaschine vorteilhaft zuführbar.
Ein weiterer Ausgangspunkt ist, daß nach der Ablage des aufbereiteten Halmgutes auf dem Feld kein Arbeitsvorgang außer dem Laden und dem Transport zum Silo mehr erfolgen soll. Daß die Ablage des Halmgutes auf dem Feld in einer verdichteten Matte positive Folgen für den Trocknungsverlauf und für die Verringerung der Verluste hat, war bereits bekannt. Besonders kleine Halmgutteile würden bei einer weiteren nachträglichen Bearbeitung verlorengehen, da diese dann kaum noch aufnehmbar sind.

Erfindungsgemäß wird, um eine möglichst große Oberfläche der Halmgutmatte zu erreichen, diese in einer solchen Breite gebildet, daß nahezu die gesamte Feld- bzw. Wiesenfläche nach der Aufbereitung belegt wird. Dazu muß das Halmgut bereits vor der Ablage auf dem Feld innerhalb der Aufbereitungsmaschine breitverteilt werden. Nach dem Verfahren wird eine bereits breitverteilte Halmgutschicht an Mittel zur Halmgutverdichtung und -ablage übergeben, von denen es als Halmgutmatte auf möglichst mehr als 90 % der Feldfläche abgelegt wird.
Die Halmgutmatte hat damit eine Breite, die mehr als 90 % des Mittenabstandes von zwei aufzunehmenden Schwaden bzw. der Breite eines Mähstreifens aufweist. Um dies zu erreichen, ist der aufgenommene Schwad, der von gebräuchlichen Mähmaschinen abgelegt wurde, im allgemeinen auf mehr als das Doppelte der Schwadbreite innerhalb der Aufbereitungsmaschine breitzustreuen.

Wird die Halmgutmatte in Breitablage auf dem Feld zum Trocknen abgelegt, ist ein wesentlich günstigerer Trocknungsverlauf gegeben, da die Dicke der Halmgutmatte gegenüber vergleichbaren Verfahren wesentlich geringer ist. Geht man von einer Flächenbelegung bei bekannten Verfahren von bis zu ca. 60 % und bei dem Verfahren nach der Erfindung von ca. 95 % aus, ist bei sonst gleichen Bedingungen ein Verhältnis der Dicke der Halmgutmatten von ca. 3 : 2 vorhanden. Damit ist bei dem Verfahren nach der Erfindung noch eine Tagessilage erreichbar, wenn Wetterverhältnisse vorliegen, die dies bei bekannten Verfahren nicht mehr zulassen.

Die Breitverteilung des Erntegutes kann innerhalb der Aufbereitungsmaschine bereits vor oder auch nach der Aufbereitung, muß aber vor der Mattenbildung erfolgen.

Die Aufbereitungsmaschine nach der Erfindung wird von einem landwirtschaftlichen Zugfahrzeug gezogen und von diesem auch angetrieben. Sie weist einen Rahmen auf, der sich einerseits über eine Zugdeichsel an dem Zugfahrzeug und andererseits auf Rädern zum Erdboden hin abstützt. Am Vorderteil des Rahmens ist eine Vorrichtung zur Schwadaufnahme gelenkig befestigt, die in bekannter Weise als Pick-up oder als Aufnahmebürste oder -walze gestaltet ist. Die Arbeitshöhe dieser Vorrichtung ist einstellbar über Laufräder, deren Stellung zur Vorrichtung veränderbar ist. Der aufgenommene Schwad wird beispielsweise von der Pick-up an die nachfolgenden Bearbeitungsmittel weitergeleitet.
Es ist aber auch möglich, daß die Aufbereitungsmaschine selbstfahrend ist, im Frontanbau ein Mähwerk betreibt, wobei von diesem das Erntegut als Schwad ohne vorherige Ablage auf dem Feld weitergeleitet wird.

Der aufgenommene Erntegutstrom, dessen Breite etwa einer Mähschwadbreite entspricht und der damit deutlich schmaler als ein Mähstreifen bzw. der Abstand zwischen zwei Mähschwaden ist, wird entweder direkt nach der Aufnahme aufbereitet und dann innerhalb der Maschine breitverteilt oder erst breitverteilt und dann aufbereitet. Es sind also in der Aufbereitungsmaschine eine Einheit zur Halmgutaufbereitung und eine Einrichtung zur Breitverteilung des Erntegutes vorhanden, wobei diese beliebig vor- oder nacheinander angeordnet sein können.
Die Einheit zur Halmgutaufbereitung besteht vorteilhaft aus zwei Förderwalzen, die gegensinnig rotieren, wobei eine der Förderwalzen beweglich gelagert ist, so daß ein Förderspalt von den Förderwalzen begrenzt wird, der sich gegen Federkraft dem anfallenden Halmgutstrom anpaßt. In der Nähe der Austrittsöffnung zwischen den Förderwalzen ist eine Auflagewalze gelagert, die auch um eine etwa horizontale, quer zur Fahrtrichtung gelegene Achse angetrieben rotiert. Die Auflagewalze wird von dem Halmgut je nach Anordnung und Drehrichtung über- oder unterlaufen, während dieses aber noch teilweise von den Förderwalzen gehalten wird.
In Zusammenwirkung mit der Auflagewalze ist die Funktion eines Hammerrotors gegeben, der ebenfalls um eine horizontale, quer zur Fahrtrichtung liegende Achse rotiert, die etwa auf Höhe der Auflagewalze angeordnet ist. Am Hammerrotor sind versetzt zueinander angebrachte Hammerkörper gelagert, die einzeln um Querachsen verdrehbar sind, so daß sich die Hammerkörper durch Fliehkraftwirkung vom Umfang des Hammerrotors nach außen hin ausrichten. Zwischen den Außenkanten der so ausgerichteten Hammerkörper und der Auflagewalze wird ein Hammerspalt begrenzt.

Das die Auflagewalze über- oder unterlaufende Halmgut wird gleichmäßig und fast vollflächig von aufeinanderfolgenden Hammerschlägen beaufschlagt, wobei seine Bewegungsrichtung umgeleitet wird und die Auflagewalze als Amboß wirkt. Da die Auflagewalze einen geringen Radius aufweist, wird eine zusätzliche Aufbereitungswirkung erzielt durch die Umleitung des Halmgutstromes um diesen Radius.
Die Ausführung der Einheit zur Halmgutaufbereitung ist in ihrer Wirkung vorteilhaft. Es sind aber auch Einheiten, in denen das Halmgut auf andere Weise aufbereitet wird, einsetzbar. So können z.B. Quetsch- oder Reibwalzen aber auch mit Schlegeln besetzte Trommeln zur Halmgutaufbereitung Anwendung finden.
Das aufbereitete Halmgut hat keinen nennenswerten eigenen Formwiderstand mehr und die Kutikula der Halme und Blätter ist in einer die Verdunstung fördernden Weise verletzt.
Die Einrichtung zur Breitverteilung des Erntegutes, die entweder vor oder nach der Einheit zur Aufbereitung angeordnet ist, übernimmt das aufgenommene bzw. schon aufbereitete Halmgut und wirft bzw. fördert es innerhalb der Aufbereitungsmaschine zu den nachgeordneten Bearbeitungsmitteln. Je nach Ausführung kann dies die Einheit zur Erntegutaufbereitung sein oder es sind Mittel zur abschließenden Halmgutverdichtung und -ablage.

Innerhalb der Aufbereitungsmaschine finden also technologisch die folgenden Bearbeitungsschritte statt:
- entweder Erntegutaufnahme, -aufbereitung, -breitverteilung, -verdichtung und -ablage
- oder Erntegutaufnahme, -breitverteilung, -aufbereitung, -verdichtung und -ablage,
wobei dem vorgeordnet das Mähen im gleichen Arbeitsgang erfolgen kann.

Die Einrichtung zur Breitverteilung des Halmgutes umfaßt beispielsweise ein Paar gegensinnig um etwa vertikale Achsen rotierender, von Heuwerbungsmaschinen her bekannten Zinkenkreisel, deren Verteilfunktion in Zusammenwirkung mit einem Bodenblech und einem Haubenblech gegeben ist.

Um unter allen möglichen Bedingungen eine möglichst gute Halmgutverteilung und eine den Erfordernissen angepaßte Verteilungsbreite zu erreichen, sind die funktionsbestimmenden Parameter der Zinkenkreisel einstellbar.

Eine weitere Möglichkeit zur Breitverteilung des Halmgutes innerhalb der Aufbereitungsmaschine besteht in der Nutzung von Streuwalzen, die z.B. auch bei Stalldungstreuern Anwendung finden und deren Wurfeigenschaften veränderbar und einstellbar sind. Auch hier ist die Wirkung der Breitverteilung des Halmgutes in Zusammenwirkung mit einem Bodenblech und einem Haubenblech gewährleistet.

Durch die Nutzung eines Zinkenförderers als Einrichtung zur Breitverteilung des Halmgutes wird das Halmgut nicht wie bei den o.g. Bauvarianten durch gezielten Wurf breitverteilt, sondern es wird geführt in Richtung der Einheit zur Halmgutaufbereitung gefördert. Das hat den Vorteil der Verminderung einer Verstopfungsgefahr, die aber auch bei den o.g. Bauvarianten vermeidbar ist.
Dazu könnten z.B. die Endbereiche der Bodenbleche durch Bandförderer ersetzt werden, um eine sichere Übergabe des Halmgutes an die nachfolgenden Bearbeitungsmittel zu garantieren.

Diese genannten Beispiele für Einrichtungen zur Breitverteilung des Halmgutes sind besonders vorteilhaft nutzbar. Es können aber auch andere Bauvarianten wie etwa Verteilschnecken oder angetriebene Verteilzinken zum Einsatz kommen.

Das aufbereitete, breitverteilte Halmgut wird abschliessend von den Mitteln zur Halmgutverdichtung und -ablage, vorzugsweise einem Paar gegensinnig umlaufender Druckwalzen, übernommen und zwischen ihnen hindurchgefördert. Diese Druckwalzen haben bereits die Breite, die der Ablagebreite entspricht. Sie befinden sich dicht über dem Erdboden, um eine schonende Halmgutablage zu sichern. Eine der Druckwalzen ist dabei gegen Federkraft verschiebbar gelagert, so daß sich der Preßspalt dem anfallenden Halmgutstrom anpaßt. Der Preßspalt befindet sich in Abgaberichtung der vorgeordneten Arbeitsorgane der Aufbereitungsmaschine. Eine der Druckwalzen kann auch durch ein Ablageband ersetzt sein, welches mit der anderen Druckwalze zusammenwirkt. Vorrangig ist es Aufgabe der Mittel zur Halmgutverdichtung und -ablage, zu verhindern, daß das Erntegut undefiniert auf die Ablagefläche bzw. zwischen Stoppeln geworfen wird. Durch die Mittel wird die Ablagerichtung und -geschwindigkeit bestimmt, um die eingangs beschriebenen Vorteile zu erreichen. Dies ist auch möglich, wenn nur eine Ablagewalze oder ein Ablageband angeordnet wird, wobei dann das breitverteilte aufbereitete Erntegut auf diese Walze oder das Band auftrifft, abgebremst und definiert in Richtung der Ablagefläche abgegeben wird, aber nur eine geringere Verdichtungswirkung gegeben ist und damit also eine relativ lockere Matte gebildet wird.

Der Antrieb der Mittel zur Halmgutverdichtung und -ablage erfolgt selektiv entweder fahrgeschwindigkeitsabhängig über Bodenräder der Aufbereitungsmaschine oder mit einer Drehzahl, die von der Drehzahl des Antriebsmotors der Aufbereitungsmaschine abhängt. Die Umschaltung von einer zur anderen Antriebsart erfolgt in Abhängigkeit von einem Grenzwert der Fahrgeschwindigkeit automatisch. Der Grenzwert ist konstruktiv festgelegt, kann aber mit einfachen Mitteln variiert werden. Bei Unterschreitung des Grenzwertes werden die Mittel vom Antriebsmotor aus angetrieben. Sie rotieren also auch beim Stillstand der Aufbereitungsmaschine, bis alle anzutreibenden Arbeitsorgane abgeschaltet werden, indem beispielsweise die Zapfwelle zum Stillstand gebracht wird. Bei Überschreitung des Grenzwertes der Fahrgeschwindigkeit, was bei der Arbeit unter normalen Bedingungen der Fall ist, werden die Mittel zur Halmgutverdichtung und -ablage von zumindest einem Bodenrad aus angetrieben. Bei Kurvenfahrten erfolgt der Antrieb der Mittel von dem Bodenrad mit der höheren Umfangsgeschwindigkeit aus. Diese Art des Antriebes hat zur Folge, daß die Halmgutmatte bei der Arbeit unter normalen Bedingungen so abgelegt wird, daß die Relativgeschwindigkeit zwischen der Ablagefläche und der Halmgutmatte nahe Null ist. Das Erntegut wird also sehr schonend ohne Zerstörung der sehr breiten Matte abgelegt.
Im Betrieb mit geringer Fahrgeschwindigkeit oder auch im Stillstand der Aufbereitungsmaschine arbeiten die Mittel mit einer geringen, aber annähernd konstanten Geschwindigkeit. Damit wird die Ablagegeschwindigkeit größer als die Fahrgeschwindigkeit und die Halmgutmatte wird in Wellen auf der Ablagefläche abgelegt. Bei Stillstand der Aufbereitungsmaschine wird alles in der Maschine befindliche Erntegut herausgefördert, solange bis die Antriebsverbindung zum Antriebsmotor unterbrochen wird. Unter Umständen kann es dabei zwar zur Haufenbildung hinter der Maschine kommen, aber es bleiben keine Erntegutrückstände in der Maschine, die bei bekannten, weiter oben beschriebenen Antriebsvarianten zur Haufenbildung beim erneuten Fahrtbeginn der Aufbereitungsmaschine führen würden. Dies ist beispielsweise bei Beendigung der Arbeit von Bedeutung, da in diesem Falle die Maschine vollständig entleert sein soll.

Die detaillierte Beschreibung der Erfindung erfolgt an Hand von Ausführungsbeispielen für das Verfahren ermöglichende Aufbereitungsmaschinen. In den dazugehörigen Zeichnungen stellen im einzelnen dar:
- Fig. 1:: Draufsicht auf eine erfindungsgemäße Aufbereitungsmaschine in schematischer Darstellungsweise hinter einem Zugfahrzeug beim Arbeitsvorgang;
- Fig. 2:: Draufsicht auf die Aufbereitungsmaschine nach Fig. 1 hinter einem Zugfahrzeug beim Arbeitsvorgang, wobei vom Zugfahrzeug gleichzeitig ein Frontmähwerk geführt und angetrieben wird;
- Fig. 3:: die Aufbereitungsmaschine nach Fig. 1 in einer Seitenansicht;
- Fig. 4:: die Aufbereitungsmaschine nach Fig. 1 in einer vergrößerten Draufsicht;
- Fig. 5:: eine Einheit zur Halmgutaufbereitung als Detail X aus Fig. 3 in schematischer teilweise geschnittener Darstellungsweise;
- Fig. 6:: eine Aufbereitungsmaschine anderer Ausführung in einer schematischen Seitenansicht;
- Fig. 7:: die Aufbereitungsmaschine nach Fig. 6 in einer Draufsicht;
- Fig. 8:: eine Aufbereitungsmaschine wiederum anderer Ausführung in einer schematischen Seitenansicht;
- Fig. 9:: die Aufbereitungsmaschine nach Fig. 8 in einer Draufsicht;
- Fig. 10:: eine Einheit zur Halmgutaufbereitung als Detail Z aus Fig. 8 in schematischer, teilweise geschnittener Darstellungsweise;
- Fig. 11:: Antriebssystem für die Mittel zur Halmgutverdichtung und -ablage einer Aufbereitungsmaschine in perspektivischer, teilweise geschnittener Darstellungsweise bei Weglassung hierfür unwesentlicher Details der Aufbereitungsmaschine.

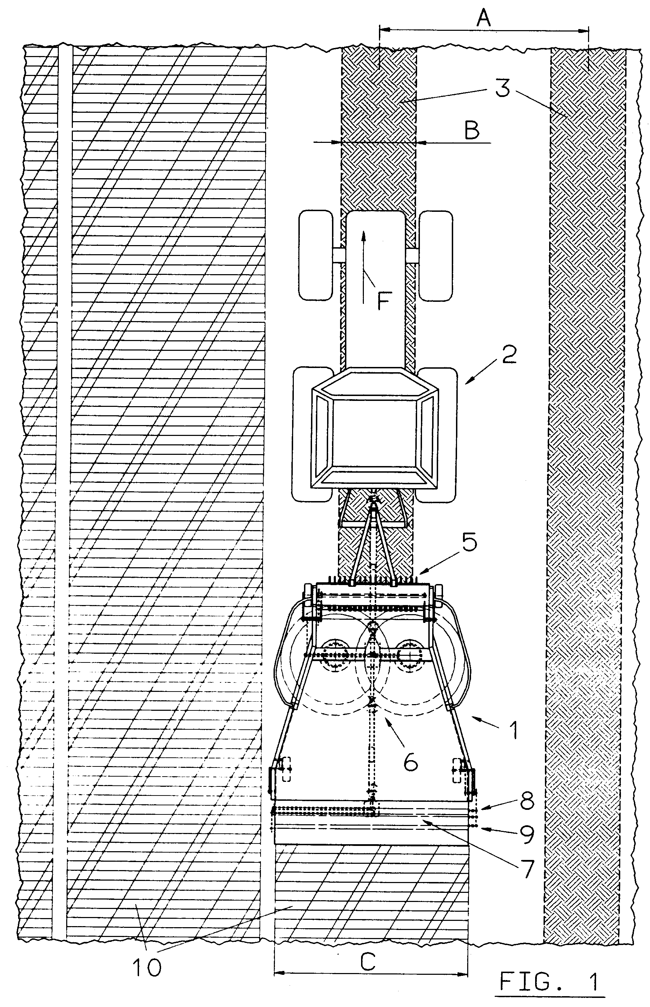

Wie in Fig. 1 verdeutlicht ist, wird eine Aufbereitungsmaschine 1 von einem landwirtschaftlichen Zugfahrzeug 2 in Fahrtrichtung F gezogen. Auf der Feld- oder Wiesenfläche liegen im Abstand A zueinander Schwaden 3 aus gemähtem Halm- oder Blattgut, die die Schwadbreite B aufweisen. Die Schwadbreite B ist kleiner als die Innenspurbreite des Zugfahrzeugs 2, so daß der Schwad 3 beim Überfahren durch das Zugfahrzeug 2 nicht von den Rädern des Zugfahrzeugs 2 überrollt wird.

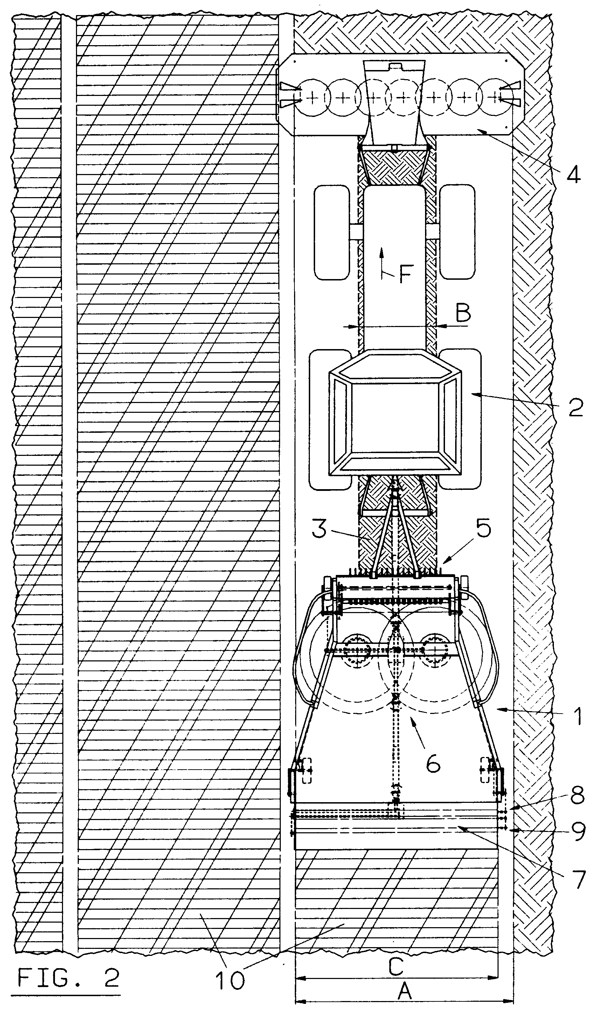

Wie in Fig. 2 dargestellt, kann auch eine Mähmaschine 4 frontseitig an dem Zugfahrzeug 2 angebaut sein und von diesem in Fahrtrichtung F geführt sowie angetrieben werden.

Die Mähbreite A der Mähmaschine 4 nach Fig. 2 ist gleich dem Schwadabstand A nach Fig. 1 und wird darum mit dem gleichen Bezugszeichen versehen. Sie ist größer als die Außenspurbreite des Zugfahrzeugs 2, so daß kein ungeschnittenes Halm- oder Blattgut von dem Zugfahrzeug 2 überfahren wird. Von der Mähmaschine 4 wird etwa mittig innerhalb der Spur des Zugfahrzeugs 2 ein Schwad 3 der Breite B abgelegt.

Vorzugsweise ist die Mähmaschine 4 so am Zugfahrzeug 2 angebaut, daß ihre fahrtrichtungsparallele Mittelachse leicht versetzt zu der fahrtrichtungsparallelen Mittelachse des Zugfahrzeugs 2 gelegen ist, oder die Aufbereitungsmaschine 1 wird leicht versetzt hinter dem Zugfahrzeug 2 gezogen. Dadurch wird erreicht, daß sich das Zugfahrzeug 2 und die angehängte Aufbereitungsmaschine 1 zwar noch auf dem Mähstreifen aber in möglichst großem Abstand zur Mähkante bewegen, um die Beschädigung von ungemähtem Halmgut auch bei Kurvenfahrten zu vermeiden.
Es ist auch möglich, die Aufbereitungsmaschine 1, das Zugfahrzeug 2 und die Mähmaschine 4 als selbstfahrende Maschinenkombination auszubilden, wobei dann keine zwischenzeitliche Ablage des Mähgutes auf dem Feld erfolgen muß, sondern eine direkte Übergabe an die Aufbereitungsmaschine möglich ist.

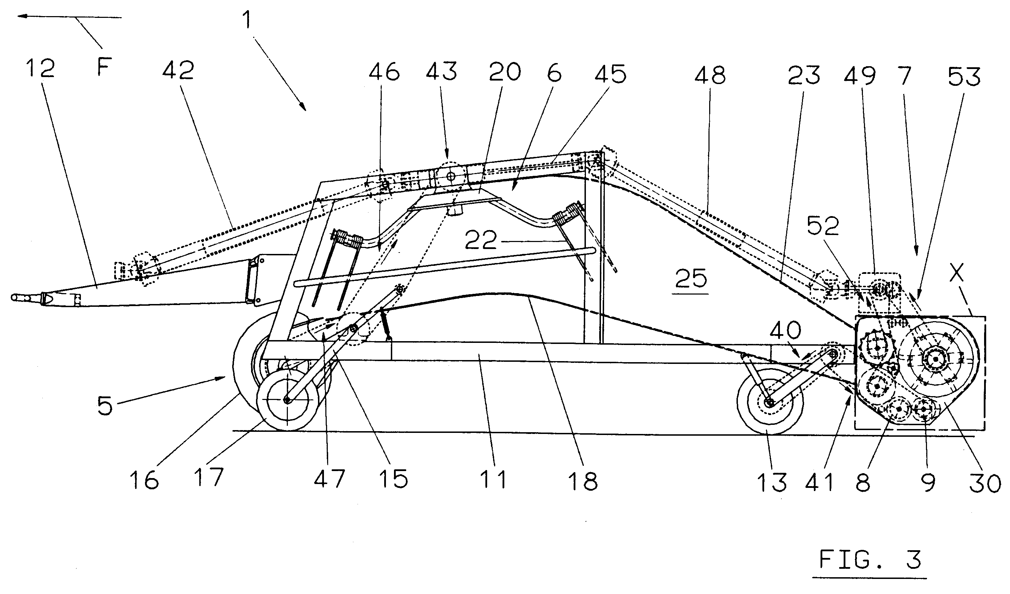

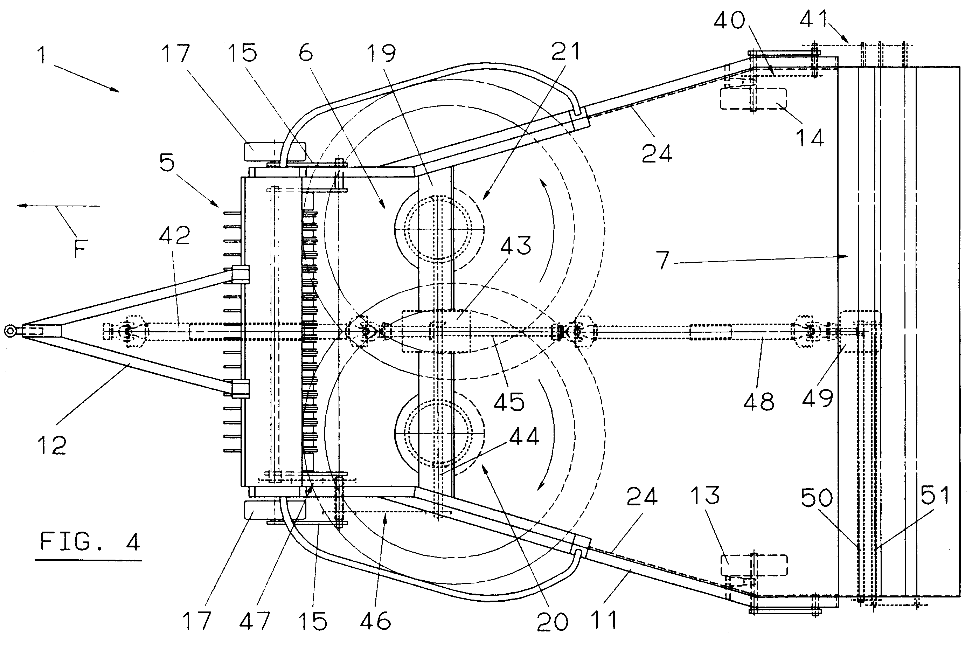

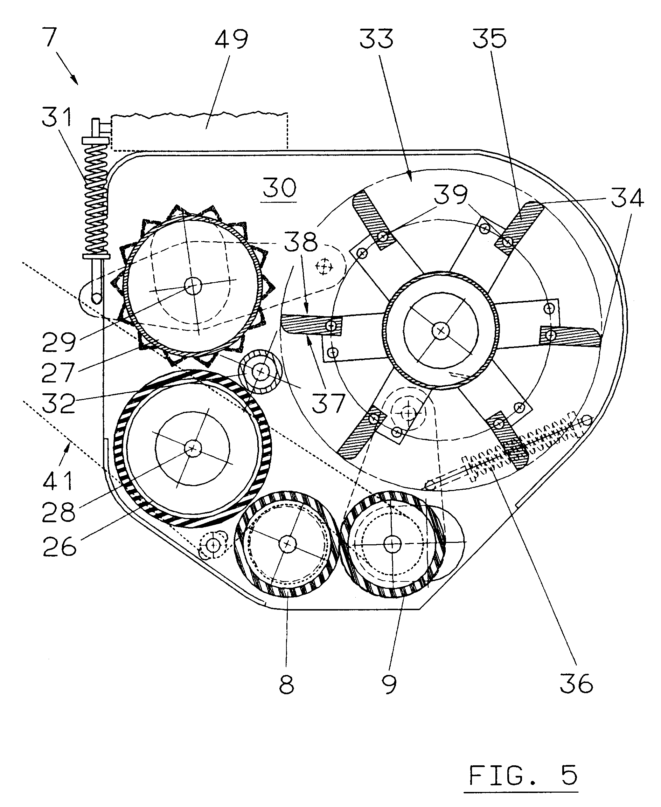

Die entsprechend Fig. 1 und Fig. 2 heckseitig des Zugfahrzeugs 2 angehängte Aufbereitungsmaschine 1 weist eine Einrichtung 5 zur Aufnahme des Schwades 3, eine Einrichtung 6 zur Breitverteilung des Halmgutes und eine Einheit 7 zur Halmgutaufbereitung auf. Von einem Paar Druckwalzen 8, 9 wird dem breitverteilt aufbereitetem Halmgut eine abschließende Verdichtung erteilt und dieses als Matte 10 einer Breite C auf dem Erdboden abgelegt. Die Breite C entspricht annähernd dem Schwadabstand A bzw. der Mähbreite A, wodurch erreicht wird, daß fast die gesamte Feld- bzw. Wiesenfläche mit Matten 10 aufbereitetem Halmgutes belegt wird. Bei üblichen Schwadbreiten B und Schwadabständen A hat das zur Folge, daß die Breite C der Matte 10 mehr als doppelt so groß sein muß als die Schwadbreite B, was durch die Einrichtung 6 zur Breitverteilung des Halmgutes erreicht werden muß. Aus den Fig. 3 und 4 wird der Aufbau der Aufbereitungsmaschine 1 deutlicher, wobei konstruktive Details nur ein Ausführungsbeispiel bilden und abänderbar sind.
Die Aufbereitungsmaschine 1 weist einen Rahmen 11 auf, der sich frontseitig über eine Zugdeichsel 12 am Zugfahrzeug 2 und heckseitig über Räder 13, 14 am Erdboden abstützt. Am Rahmen 11 sind Haltearme 15 für die Einrichtung 5 zur Schwadaufnahme gelagert. Diese ist als Pick-up in üblicher Weise gestaltet, deren Zinken gesteuert Kurvenbahnen 16 beschreiben und deren Aufnahmehöhe durch Stützräder 17 einstellbar ist. Die Pick-up gibt das Halmgut an ein Bodenblech 18 ab.
Oberhalb des Bodenbleches 18 sind in einer Quertraverse 19 des Rahmens 11 zwei Zinkenkreisel 20, 21 um etwa vertikale oder leicht in Fahrtrichtung F geneigte Achsen drehbar gelagert. Diese Zinkenkreisel 20, 21 rotieren gegensinnig. In Zusammenwirkung mit dem Bodenblech 18 fördern ihre Zinken 22, die auch gesteuerte Bewegungen ausführen können, das Halmgut entgegen der Fahrtrichtung F zwischen sich hindurch und erteilen dem Halmgut eine Wurfbewegung, die ein Breitverteilen innerhalb der Aufbereitungsmaschine 1 zur Folge hat. Das Bodenblech 18 und ein Haubenblech 23 sowie Seitenwände 24 bilden dabei die Wurfbahn begrenzende Flächen bzw. einen Wurfraum 25. Dieser Wurfraum 25 hat an seinem Ende sein vertikales Minimalmaß und ein horizontal und quer zur Fahrtrichtung F gesehenes Maximalmaß erreicht.
Dieses letztgenannte Maß entspricht bereits der Breite C der abzulegenden Matte 10 und wird bestimmt von dem Abstand der beiden Seitenwände 24 voneinander sowie von den eingestellten Wurfparametern an der Einrichtung 6.
Das Bodenblech 18 kann in seinem Endbereich durch einen Bandförderer oder durch Förderwalzen ersetzt werden, um eine Staubildung im Wurfraum 25 auszuschließen. Da das Halmgut vor allem entlang des Haubenbleches 23 geführt wird, kann das Bodenblech 18 auch teilweise unterbrochen ausgeführt sein, so daß der Wurfraum 25 nach unten hin offen ist. Die Abschlußbegrenzung des Wurfraumes 25 bildet die Einheit 7 zur Aufbereitung des Halmgutes (siehe auch Fig. 5), speziell ein Paar von Förderwalzen 26, 27 dieser Einheit 7, die das breitverteilte Halmgut übernehmen und zwischen sich hindurchfördern.
Die untere Förderwalze 26 und die obere Förderwalze 27 rotieren gegensinnig um horizontale, quer zur Fahrtrichtung F liegende Achsen 28, 29 und sind in seitlichen Lagerplatten 30 gelagert. Die Oberfläche der oberen Förderwalze 27 ist profiliert, um die Übernahme des Halmgutstromes und dessen sicheren Weitertransport zu garantieren. Zwischen beiden Förderwalzen 26, 27 wird ein Förderspalt begrenzt, durch den der Halmgutstrom hindurchbewegt wird. Je nach Stärke des Halmgutstromes stellt sich die Breite des Förderspaltes selbsttätig ein, da die obere Förderwalze 27 in Langlöchern der Lagerplatten 30 gelagert ist und durch Federn 31 in Richtung der unteren Förderwalze 26 gedrückt wird.
Ferner umfaßt die Einheit 7 zur Halmgutaufbereitung ein dem Förderspalt unmittelbar nachgeordnetes, mehr der unteren Förderwalze 26 zugeordnetes, vom Halmgutstrom überlaufenes Auflageorgan. Es ist vorzugsweise als umlaufend antreibbare Auflagewalze 32 auszubilden, kann aber auch als geeignet geformter, feststehender Auflagekörper gestaltet sein. Die Auflagewalze 32 weist einen hochfesten, biegesteifen, glatten zylindrischen Walzenmantel auf und hat einen Durchmesser, der einen kleinen Bruchteil des Durchmessers der benachbarten unteren Förderwalze 26 entspricht. Dadurch kann die Auflagewalze 32 nahe dem Förderspalt im Zwickel zwischen den beiden Förderwalzen 26, 27 angeordnet werden, wodurch gesichert ist, daß sich der Halmgutstrom direkt über der Auflagewalze 32 entlang bewegt.
Der Auflagewalze 32 nachgeordnet ist ein Hammerrotor 33, der so in den Lagerplatten 30 gelagert ist, daß sich seine Rotationsachse parallel zu der Rotationsachse der Auflagewalze 32 befindet.
Der Hammerrotor 33 ist gleichsinnig zur oberen Förderwalze 27 umlaufend antreibbar und beschreibt mit den Enden 34 seiner sich unter Zentrifugalwirkung frei ausrichtenden Hammerkörper 35 eine Arbeitsfläche, die mit der Auflagefläche der vorgeordneten Auflagewalze 32 einen schräg nach hinten, abwärts gerichteten gedachten Hammerspalt begrenzt. Dieser Hammerspalt ist vorzugsweise in seiner Breite einstellbar, so daß seine Breite an der Stelle der maximalen Annäherung der Enden 34 der Hammerkörper 35 an die Oberfläche der Auflagewalze 32 zwischen 0,2 mm und 2 mm beträgt, vorzugsweise in einer Größe von 0,2 mm bis 0,6 mm eingestellt wird. Dies kann günstig vorgenommen werden, indem der Hammerrotor 33 in den Lagerplatten 30 geringfügig parallelverschiebbar gelagert ist.
Die gedachte Förderspaltebene und die gedachte Hammerspaltebene haben eine etwa unter 90 Grad bis 120 Grad zueinander verlaufende Ausrichtung.
Direkt nachdem der Halmgutstrom den Förderspalt verlassen hat und sich breitverteilt über der Auflagewalze 32 befindet, wird er von oben nach unten mit Schlägen durch die Enden 34 der Hammerkörper 35 beaufschlagt.
Dabei dient die Auflagewalze 32 als Amboß. Die Verletzung der Kutikula des Halmgutes wird begünstigt durch die Umlenkung des Halmgutstromes um den relativ geringen Radius der Auflagewalze 32 nach unten, wobei die Oberfläche der Hammerkörper 35 noch eine Reibwirkung auf das Halmgut ausübt.

Der Halmgutstrom wird nun direkt vom Hammerrotor 33 in Richtung eines Preß-Spaltes gefördert bzw. geworfen, der von dem Paar gegenläufig angetriebener Druckwalzen 8, 9 gebildet wird. Die Druckwalzen 8, 9 üben, wie bereits beschrieben, eine abschließende verdichtende Wirkung auf den Halmgutstrom aus und legen diesen auf dem Boden ab. Sie sind vorzugsweise mit einer Gummiummantelung versehen.

Eine der Druckwalzen 8 ist fest positioniert, jedoch in den Lagerplatten 30 drehbeweglich gelagert. Die andere Druckwalze 9 ist ebenfalls drehbeweglich in diesen Lagerplatten 30 gelagert, aber wird durch Druckfedern 36 in Richtung der Druckwalze 8 mit einer Kraft beaufschlagt. Dazu ist eine Langlochführung in den Lagerplatten 30 vorgesehen. Die Position der Druckwalze 9 paßt sich selbsttätig dem anfallenden Halmgutstrom an, wie dies auch bei der Förderwalze 27 der Fall ist.
Die Druckwalzen 8, 9 sind sehr tief gelagert, so daß in Betriebsstellung der Maschine die untere Kulminationslinie der Druckwalzen 8, 9 unterhalb der von den Stoppelenden des vorangehend gemähten Halmgutes gebildeten Ablagefläche liegt. Dadurch ist gesichert, daß der Halmgutstrom nach Verlassen des Preßspaltes nur einen kurzen Weg zur Ablagefläche hin zu überwinden hat und eine geschlossene Matte abgelegt wird.
Die Hammerkörper 35 haben bei dem dargestellten Ausführungsbeispiel die Gestalt von rechtwinkligen Flachstahlstücken, deren im Betrieb der Auflagewalze 32 zugewandte Unterseite 37 im Bereich des Endes 34 mit einer Rundung zur Oberseite 38 des Hammerkörpers 35 geführt ist. Dabei ist der Kulminationspunkt der Rundung bevorzugt vor dem kantigen Übergang der Rundung in die Oberseite 38 des Hammerkörpers 35 gelegen, so daß stets der Rundungsbereich des Endes 34 und nicht die Übergangskante mit dem Halmgut in Eingriff gelangt.

Die Hammerkörper 35 sind bevorzugt quadratisch ausgebildet, und bei einer Dicke von etwa 15 - 40 mm, vorzugsweise 20 mm, haben sie eine Breite von etwa 80 - 140 mm, vorzugsweise 100 mm. Dementsprechend haben die Hammerkörper 35, die um zur Rotationsachse des Hammerrotors 33 parallele Drehachsen 39 um 360 Grad frei drehbar am Hammerrotor 33 gelagert sind, eine hohe kinetische Energie, so daß sie dem Halmgut bei jedem Auftreffen einen starken Hammerschlag versetzen.

Bevorzugt ist der Hammerrotor 33 mit sechs über den Umfang verteilten Reihen von Hammerkörpern 35 versehen.
Dabei sind die Drehachsen 39 der Hammerkörper 35 innerhalb jeder Reihe gegenseitig in Umfangsrichtung versetzt, so daß der Hammerrotor 33 trotz der hohen Schlagkräfte infolge der Verteilung der Hammerkörper 35 einen ruhigen, gleichmäßigen Umlauf hat.

Die Hammerkörper 35 einer Reihe sind in Bezug auf die Hammerkörper 35 einer in Drehrichtung jeweils benachbarten Reihe gegeneinander um ein Maß axial versetzt, das etwa dem Mittenabstand zwischen zwei in einer Reihe benachbarten Hammerkörpern 35 entspricht. Einzelne Reihen sind dabei endseitig mit Ausgleichs-Hammerkörpern versehen, die eine dem axialen Versatzmaß entsprechende Breite aufweisen. Diese Ausbildung stellt sicher, daß trotz des Abstandes zwischen zwei in einer Reihe benachbarten Hammerkörpern 35 die von den Enden 34 der Hammerkörper 35 durchlaufende Arbeitsfläche eine vollständig geschlossene bzw. zusammenhängende Fläche bildet und keine längslaufenden unbearbeiteten Streifen in der durch den Hammerrotor 33 bearbeiteten Halmgutschicht verbleiben, wobei die Breite der Arbeitsfläche bereits der Breite C von abzulegenden Halmgutmatten 10 entspricht.

Die Druckwalzen 8, 9 werden separat über eines der Räder 13 oder 14 (im Ausführungsbeispiel: 14) angetrieben. Dazu sind Rollenkettengetriebe 40, 41 vorgesehen, durch die das Drehmoment von der Achse des Rades 14 auf die Druckwalzen 8, 9 übertragen wird. Diese Art des Antriebs der Druckwalzen 8, 9 ist vorteilhaft, da die gegensinnige Umfangsgeschwindigkeit der Druckwalzen 8, 9 so exakt an die Fahrgeschwindigkeit anzupassen ist, was die Ablage der Halmgutmatte begünstigt. Bei der Ablage sollte die Relativgeschwindigkeit zwischen Halmgutmatte und Erdboden möglichst nahe Null sein.
Zur Schaffung eines Selbstreinigungseffektes ist eine Druckwalze 9 vorzugsweise geringfügig schneller angetrieben, beispielsweise im Drehzahlverhältnis 16 : 15, als die andere Druckwalze 8.
Der Antrieb der Aufbereitungsmaschine 1 erfolgt von der nicht in den Zeichnungen dargestellten Zapfwelle des Zugfahrzeugs 2 aus über eine Gelenkwelle 42, die mit einem Hauptgetriebe 43 verbunden ist. Das Hauptgetriebe 43 ist mittig in die Quertraverse 19 des Rahmens 11 integriert und weist eine Getriebeausgangswelle 44, die innerhalb der Quertraverse 19 gelagert ist, und eine entgegen Fahrtrichtung F nach hinten ragende Ausgangswelle 45 auf. Von der Getriebeausgangswelle 44 werden die Zinkenkreisel 20, 21 über Kegelräder angetrieben.
Weiterhin ist diese Getriebeausgangswelle 44 einseitig über die Länge der Quertraverse 19 hinaus verlängert und treibt dort ein Rollenkettengetriebe 46 an, durch das wiederum ein Rollenkettengetriebe 47 und damit die Pick-up angetrieben werden.
Von der Ausgangswelle 45 aus wird die für die Einheit 7 zur Halmgutaufbereitung erforderliche Leistung über eine Gelenkwelle 48 zu einem Getriebe 49 übertragen.
Das Getriebe 49 beinhaltet eine Kegelrad- und eine Stirnradpaarung und weist zwei nebeneinander etwa horizontal und quer zur Fahrtrichtung F liegende Ausgangswellen 50, 51 auf, die entgegengesetzt zueinander rotieren. Die Ausgangswellen 50, 51 ragen bis über die linke Seite der Aufbereitungsmaschine 1 hinaus. Von der Ausgangswelle 50 aus werden über ein Rollenkettengetriebe 52 die Förderwalzen 26, 27 und die Auflagewalze 32 angetrieben. Von der Ausgangswelle 51 aus wird der Hammerrotor 33 über ein weiteres Rollenkettengetriebe 53 in Rotation versetzt. Die Bewegungsrichtungen der Rollenketten sind in Fig. 3 durch Pfeile angedeutet.

Im Betrieb der dargestellten Aufbereitungsmaschine 1 wird ein Schwad 3 durch die Pick-up aufgenommen und auf das Bodenblech 18 gefördert, dort von den Zinkenkreiseln 20, 21 übernommen und gleichmäßig breitverteilt.
Dies ist durch die Wahl der Fahrgeschwindigkeit bzw. der Zapfwellendrehzahl aber auch an den Zinkenkreiseln 20, 21 selbst beeinflußbar. Das breitverteilte Halmgut wird von den Förderwalzen 26, 27 übernommen. Um eventuell mögliche Staubildungen vor den Förderwalzen 26, 27 zu vermeiden, kann der Endbereich des Bodenbleches 18 auch durch einen Bandförderer oder durch weitere Förderwalzen ersetzt werden. Die Förderwalzen 26, 27 fördern das Halmgut unter Bildung einer flachen Schicht zwischen sich durch den Förderspalt hindurch und der breitverteilte Halmgutstrom überläuft das Auflageorgan. Beim Überlaufen der als Amboß wirkenden Auflagewalze 32 wird die Halmgutschicht in quer zu ihrer Vorlaufrichtung ausgerichteten, dicht aufeinanderfolgenden Einwirkungsbereichen einseitigen Hammerschlägen durch die Hammerkörper 35 ausgesetzt, wobei ein Einwirkungsbereich jeweils durch die Abmessung des auf das Halmgut auftreffenden Endes 34 eines Hammerkörpers 35 definiert ist.
Als Folge der Ausbildung des Hammerrotors 33 und der gewählten Fördergeschwindigkeit für die Halmgutschicht auf dem Auflageorgan erhalten die (entsprechend dem Versatz der Hammerkörper 35 versetzten) Einwirkungsbereiche in der Halmgutschicht in Vorlaufrichtung der Halmgutschicht Abstände von etwa 5 - 30 mm zueinander, so daß die gesamte Halmgutschicht praktisch vollflächig bearbeitet wird mit der Folge, daß die Kutikula der Halme und Blätter in einem solchen Ausmaß verletzt wird, daß am Morgen eines Arbeitstages geschnittenes Halmgut bereits am Nachmittag desselben Tages eingefahren und einem Silagebehälter zugeführt werden kann.

Die Hammerkörper 35, die mit ihren Enden 34 auf die Halmgutschicht auf dem Auflageorgan oberflächlich aufprallen, dringen unter Entfaltung einer starken Quetschwirkung tief in diese Schicht ein und überstreichen dann nach dem Aufprall die Halmgutschicht an deren Oberfläche in deren Vorlaufrichtung, wodurch zusätzlich die Kutikula im Oberflächenbereich der Halmgutschicht verletzt wird.

Nach Verlassen des Hammerspaltes haben die Halme in der Halmgutmatte infolge der intensiven Hammerbearbeitung keinen nennenswerten eigenen Formwiderstand mehr, so daß die Halmgutmatte in einer geschlossenen, durch die Druckwalzen 8, 9 nochmals verdichteten, kompakten Schicht nahezu flächendeckend auf der von den Stoppelenden gebildeten Ablagefläche abgelegt werden kann.

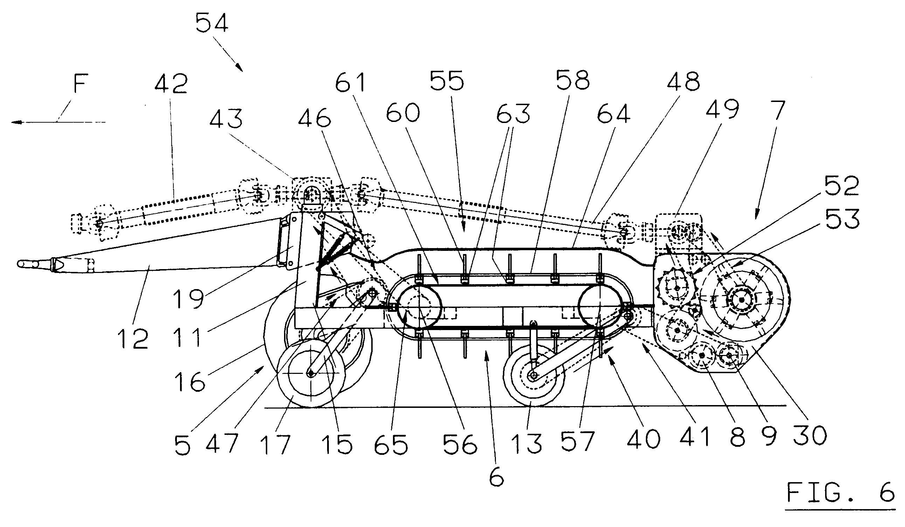

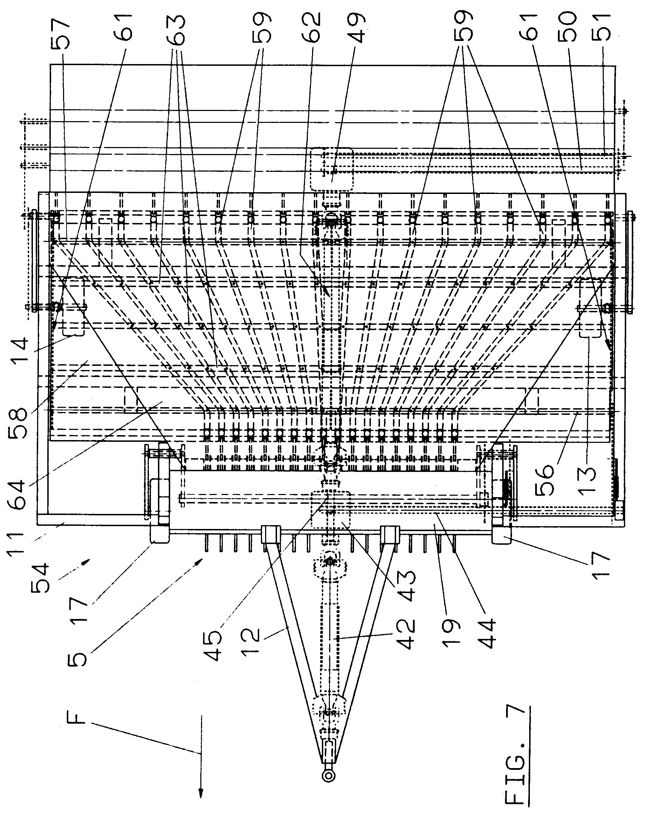

Eine Aufbereitungsmaschine 54 anderer Ausführung ist in den Fig. 6 und 7 dargestellt, wobei Hauptunterschiede zum ersten Ausführungsbeispiel in der Gestaltung der Einrichtung 6 zur Breitverteilung des Halmgutes liegen.

Gleiche Bauteile bzw. Baugruppen beider Aufbereitungsmaschinen 1; 54 sind auch mit gleichen Bezugszeichen versehen worden. Bei der Aufbereitungsmaschine 54 kommt ein Zinkenförderer 55 zur Anwendung, durch den das Halmgut nicht wie im vorherigen Beispiel geworfen, sondern geführt gefördert wird. Der Zinkenförderer 55 kann, wie im Ausführungsbeispiel dargestellt, im Anschluß an die Einrichtung 5 zur Aufnahme des Schwades 3 angeordnet sein, aber auch mit dieser kombiniert sein.
Dazu ist eine erste Umlenkachse 56 des Zinkenförderers 55 koaxial zur Drehachse der Pick-up anzuordnen und die gesamte Baugruppe muß um eine zweite Umlenkachse 57 des Zinkenförderers 55 verschwenkbar sein, um die Aufnahmehöhe den Erfordernissen anpassen zu können.

Der Zinkenförderer 55 gemäß dem Ausführungsbeispiel besteht aus einer eine Außenhülle bildenden Ummantelung 58, die in Abschnitte unterteilt ist, wobei diese Abschnitte zwischen sich jeweils Zinkenbahnen 59 begrenzen. Die Ummantelung 58 weist an den Enden des Zinkenförderers 55 kreisbogenförmige Abschnitte auf, die koaxial zu den Umlenkachsen 56, 57 gelegen sind und die Verbindung zwischen einem oberen Lasttrum und einem unteren Leertrum des Zinkenförderers 55 bilden.
Aus Fig. 7 wird deutlich, daß die Zinkenbahnen 59 spiegelbildlich zur Maschinenmittelachse jeweils im verschiedenen Winkel zu dieser angeordnet sind, In den Zinkenbahnen 59 werden Zinken 60 geführt. Sie durchlaufen das Lasttrum des Zinkenförderers 55 sowie den koaxial zu der ersten Umlenkachse 56 gelegenen kreisbogenförmigen Abschnitt. Dabei werden Querreihen von Zinken 60 durch jeweils einzelne nebeneinander liegende Zinken 60 in jeder Zinkenbahn 59 gebildet, wobei sich eine Vielzahl von Querreihen auf dem gesamten Umfang des Zinkenförderers 55 befindet. Jeder Zinken 60 einer Querreihe hat denselben Abstand von seinem benachbarten Zinken 60. Dieser Abstand vergrößert sich kontinuierlich bei der Zinkenbewegung über das Lasttrum und verringert sich kontinuierlich bei der Zinkenbewegung über das Leertrum. Innerhalb der Ummantelung 58 umlaufen Kettengetriebe 61, 62 die Umlenkachsen 56, 57, die in den Zeichnungen nur angedeutet wurden. Es sind speziell zwei äußere Kettengetriebe 61 und ein zentrales Kettengetriebe 62. Die drei Kettengetriebe 61, 62 sind antriebsmäßig miteinander verbunden, so daß ihre Antriebskettenräder die gleiche Drehzahl aufweisen. An den Ketten sind im Abstand zueinander Führungsstege 63 befestigt. Alle Führungsstege 63 durchlaufen eine Bahn, die ständig dicht an der Ummantelung 58 entlang verläuft, wobei die Führungsstege 63 immer eine horizontale, quer zur Fahrtrichtung F gelegene Ausrichtung haben. Die Zinken 60 ragen durch die Zinkenbahnen 59 hindurch in das Innere der Ummantelung 58 und sind dort an den Führungsstegen 63 querverschiebbar gelagert und werden von diesen durch die Zinkenbahnen 59 geschoben.

Das Lasttrum des Zinkenförderers 55 wird so von einer Abdeckung 64 überdeckt, daß sich diese dicht über den Spitzen der Zinken 60 befindet.

Das von der Einrichtung 5 zur Aufnahme des Schwades 3 nach oben geförderte Halmgut wird im Bereich des kreisbogenförmigen Abschnittes koaxial zu der ersten Umlenkachse 56 von den Zinken 60 des Zinkenförderers 55 übernommen, wobei diese innerhalb der Querreihen in diesem Bereich einen sehr geringen Abstand zueinander haben.
Von dort aus wird das Halmgut über das Lasttrum des Zinkenförderers 55 gefördert, wobei es durch die Abdeckung 64 in die Lücken zwischen den Zinken 60 bzw. den Querreihen gedrückt wird. Mit dem sich vergrößernden Abstand der Zinken 60 innerhalb der Querreihen wird das Halmgut auseinandergezogen und damit die Halmgutschicht kontinuierlich verbreitert. Innerhalb des kreisbogenförmigen Abschnittes koaxial zu der zweiten Umlenkachse 57 wird das breitverteilte Halmgut an die Förderwalzen 26, 27 der bereits vorab beschriebenen Einheit 7 zur Halmgutaufbereitung abgegeben. Um eine einwandfreie Halmgutabgabe in diesem Bereich zu sichern, kann dort eine Zinkensteuerung vorgesehen werden, die in den Zeichnungen nicht verdeutlicht wurde. Dies kann in bekannter Weise z.B. durch die Gestaltung der Ummantelung 58 in diesem Bereich vorgenommen werden, indem die Mittelachse dieses kreisbogenförmigen Abschnittes zur zweiten Umlenkachse 57 versetzt wird. Die Halmgutübergabe kann aber auch durch eine Abstreifwalze garantiert werden, die das Halmgut vom Zinkenförderer 55 an die Förderwalzen 26, 27 übergibt.
Der Antrieb des Zinkenförderers 55 erfolgt von der Getriebeausgangswelle 44 des Hauptgetriebes 43 über ein Rollenkettengetriebe 65. Der Antrieb der Pick-up wird wiederum durch die Rollenkettengetriebe 46, 47 realisiert. Auch bei diesem Ausführungsbeispiel ist die Verbindung zwischen dem Hauptgetriebe 43 und dem Getriebe 49 der Einheit 7 zur Halmgutaufbereitung durch die Gelenkwelle 48 gegeben.

Die so gestaltete Aufbereitungsmaschine 54 mit einem Zinkenförderer 55 beansprucht baulich einen geringen Raum im Vergleich zu dem ersten Ausführungsbeispiel.
Die Maschinenlänge wird noch weiter verringert, wenn, wie eingangs beschrieben, die Einrichtung 5 zur Schwadaufnahme und die Einrichtung 6 zur Breitverteilung des Halmgutes miteinander kombiniert werden. Die konstruktive Gestaltung des Zinkenförderers 55 ist aber technisch aufwendiger als beispielsweise die der Zinkenkreisel 20, 21 zur Breitverteilung des Halmgutes. Hier ist aber eine gleichmäßige Breitverteilung des Halmgutes gegeben.

Durch die Aufbereitungsmaschinen 1; 54 wird gemähtes, zu Schwaden 3 zusammengeführtes Erntegut aufgenommen, auf ein Maß breitverteilt, welches annähernd dem Schwadabstand A bzw. der Mähbreite A entspricht, dann intensiv aufbereitet und abschließend als Matte 10 auf der Feldfläche abgelegt. Im Ergebnis des Verfahrens bzw. der Anwendung der Aufbereitungsmaschinen 1; 54 liegt eine Feldfläche vor, die nahezu vollständig mit dünnen Erntegutmatten 10 belegt ist, wobei die Kutikula der Halme und Blätter so intensiv beschädigt ist, daß ideale Verhältnisse zur Ernteguttrocknung vorliegen.

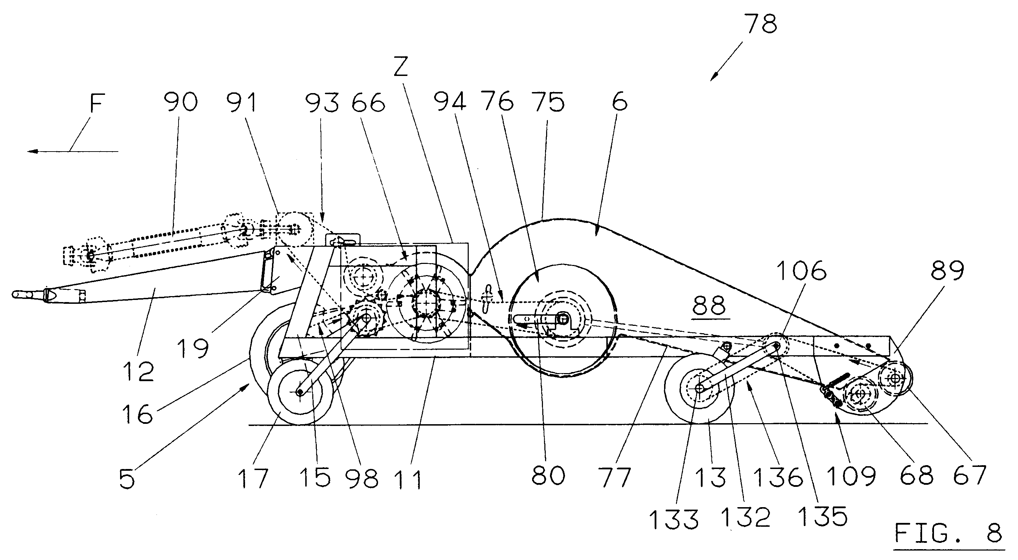

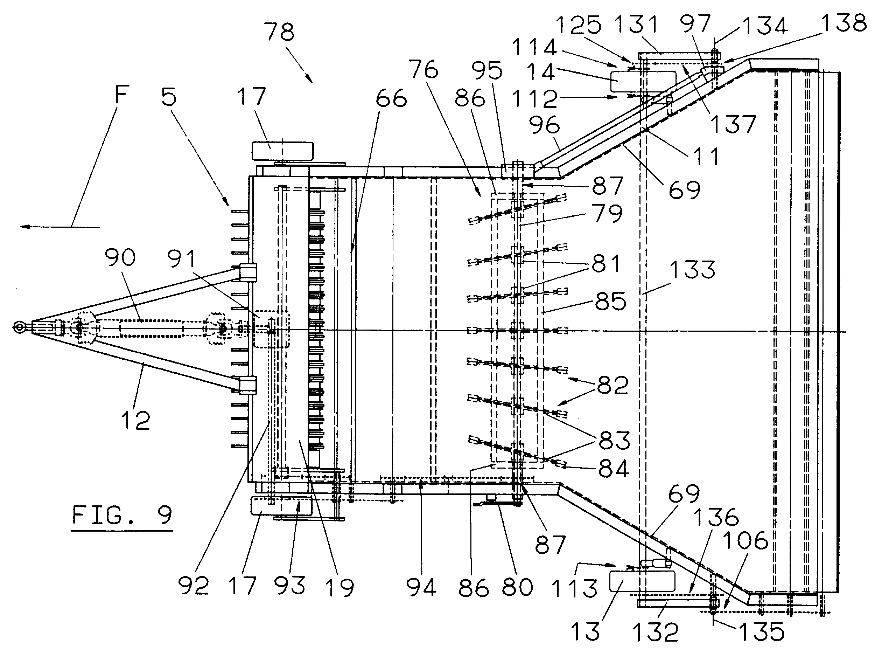

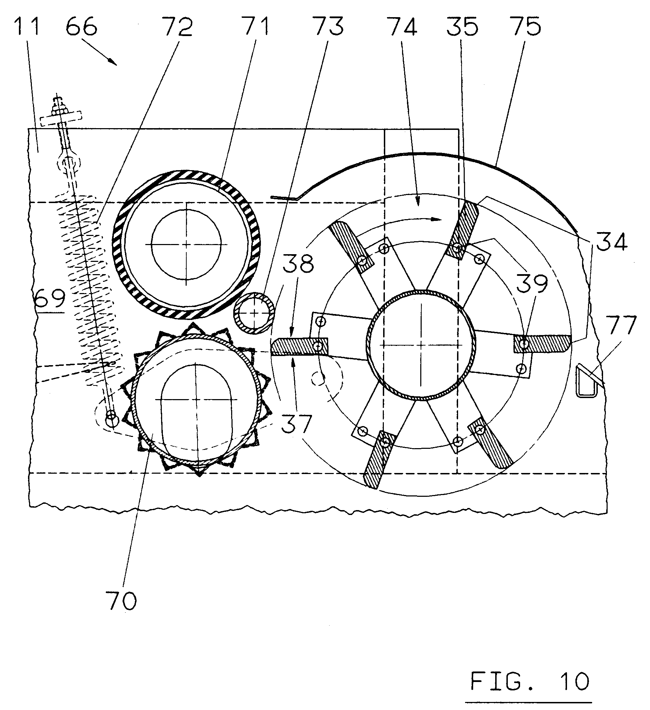

Ein weiteres Ausführungsbeispiel der Erfindung ist in den Fig. 8 bis 10 verdeutlicht. Bezugszeichen der ersten beiden Ausführungsbeispiele finden auch hier Anwendung, soweit es sich um vergleichbare Bauteile oder Baugruppen handelt.

Von einer Einrichtung 5 zur Schwadaufnahme wird aufgenommenes Erntegut direkt in Schwadbreite B an eine Einheit 66 zur Aufbereitung übergeben. Danach wird das intensiv aufbereitete Halm- oder Blattgut durch eine Einrichtung 6 breitverteilt und ihm von Druckwalzen 67, 68 eine Verdichtung erteilt. Abschließend erfolgt die Mattenablage, so daß wiederum nahezu die gesamte Feldfläche mit Erntegutmatten 10 belegt wird.
In Seitenwänden 69 gelagert, ist der Einrichtung 5 zur Schwadaufnahme eine untere Förderwalze 70 nachgeordnet, die um eine quer zur Fahrtrichtung F verlaufende, horizontale Achse rotiert. Die Oberfläche der Förderwalze 70 ist profiliert, um die Übernahme des Halmgutstromes und dessen sicheren Weitertransport zu garantieren.
Über der unteren Förderwalze 70 ist eine obere Förderwalze 71 in den Seitenwänden 69 gelagert. Diese rotiert in entgegengesetztem Drehsinn zur unteren Förderwalze 70. Zwischen beiden Förderwalzen 70, 71 wird ein etwa horizontaler Förderspalt begrenzt, durch den der Halmgutstrom hindurchbewegt wird. Je nach Stärke des Halmgutstromes stellt sich die Breite des Förderspaltes selbsttätig ein, da die untere Förderwalze 70 in Langlöchern der Seitenwände 69 gelagert ist und durch Federn 72 in Richtung der oberen Förderwalze 71 gezogen wird.

Ferner umfaßt die Einheit 66 zur Halmgutaufbereitung ein dem Förderspalt unmittelbar nachgeordnetes, mehr der oberen Förderwalze 71 zugeordnetes, vom Halmgutstrom unterlaufenes Auflageorgan. Es ist vorzugsweise als umlaufend antreibbare Auflagewalze 73 auszubilden.
Die Auflagewalze 73 weist einen hochfesten, biegesteifen, glatten zylindrischen Walzenmantel auf und hat einen Durchmesser, der einem kleinen Bruchteil des Durchmessers der benachbarten oberen Förderwalze 71 entspricht. Dadurch kann die Auflagewalze 73 nahe dem Förderspalt im Zwickel zwischen den beiden Förderwalzen 70, 71 angeordnet werden, wodurch gesichert ist, daß sich der Halmgutstrom direkt unter der Auflagewalze 73 entlang bewegt.

Der Auflagewalze 73 nachgeordnet ist ein Hammerrotor 74, der so in den Seitenwänden 69 gelagert ist, daß sich seine Rotationsachse etwa auf gleicher Höhe und parallel zu der Rotationsachse der Auflagewalze 73 befindet. Der Hammerrotor 74 ist gleichsinnig zur unteren Förderwalze 70 umlaufend antreibbar und beschreibt mit den Enden 34 seiner sich unter Zentrifugalwirkung frei ausrichtenden Hammerkörper 35 eine Arbeitsfläche, die mit der Auflagefläche der vorgeordneten Auflagewalze 73 einen aufwärts gerichteten, gedachten Hammerspalt begrenzt. Dieser Hammerspalt ist vorzugsweise in seiner Breite einstellbar.
Eine gedachte Förderspaltebene zwischen den Förderwalzen 70, 71 und die gedachte Hammerspaltebene haben eine etwa unter 90 Grad zueinander verlaufende Ausrichtung.

Direkt nachdem der Halmgutstrom den Förderspalt verlassen hat und sich unter der Auflagewalze 73 befindet, wird er von unten nach oben mit Schlägen durch die Enden 34 der Hammerkörper 35 beaufschlagt. Dabei dient die Auflagewalze 73 als Amboß. Die Verletzung der Kutikula des Halmgutes wird begünstigt durch die Umlenkung des Halmgutstromes um den relativ geringen Radius der Auflagewalze 73 nach oben, wobei die Oberfläche der Hammerkörper 35 noch eine Reibwirkung auf das Halmgut ausübt. Der aufbereitete Halmgutstrom wird nun von dem Hammerrotor 74 selbst über Kopf nach hinten gefördert.
Dazu ist der Hammerrotor 74 oben so von einem Haubenblech 75 umhüllt, daß ein Wurfkanal zwischen dem Haubenblech 75 und den Enden 34 der Hammerkörper 35 entsteht.
Das Haubenblech 75 ist so beschaffen, daß es direkt hinter den oberen Förderwalze 71 beginnt, sich bogenförmig über dem Hammerrotor 74 nach hinten erstreckt und seitlich durch die Seitenwände 69 begrenzt wird.

Die Hammerkörper 35 haben auch bei dem hier dargestellten Ausführungsbeispiel die Gestalt von rechtwinkligen Flachstahlstücken, wobei aber deren im Betrieb der Auflagewalze 73 zugewandte Oberseite 38 im Bereich des Endes 34 mit einer Rundung zur Unterseite 37 des Hammerkörpers 35 geführt ist. Dabei ist der Kulminationspunkt der Rundung bevorzugt vor dem kantigen Übergang der Rundung in die Unterseite 37 des Hammerkörpers 35 gelegen, so daß ebenfalls stets der Rundungsbereich des Endes 34 und nicht die Übergangskante mit dem Halmgut in Eingriff gelangt. Weitere Gestaltungsmerkmale des Hammerrotors 74 entsprechen denen des Hammerrotors 33 aus den ersten Ausführungsbeispielen.

Das intensiv, nahezu vollflächig aufbereitete, durch den Hammerrotor 74 über Kopf nach hinten geförderte Halmgut wird durch die Einrichtung 6 zur Breitverteilung übernommen. Diese Einrichtung 6 ist im dargestellten Ausführungsbeispiel als Streuwalze 76 gestaltet.
Ihre Funktion ist in Zusammenwirkung mit einem Bodenblech 77, das im Bereich der Streuwalze 76 als Trog ausgebildet ist, mit dem Haubenblech 75 und mit den Seitenwänden 69 der Aufbereitungsmaschine, die mit dem Bezugszeichen 78 versehen ist, gesichert. Durch die Streuwalze 76 wird das Halmgut so in Richtung der Druckwalzen 67, 68 geworfen, daß es breitverteilt auf diese auftrifft.

Die Streuwalze 76 hat etwa die Breite der Pick-up bzw. der Einheit 66 zur Halmgutaufbereitung und weist eine auch im Betrieb stillstehende Mittelwelle 79 auf, deren Position aber über einen Hebel 80 veränderbar ist. Auf Lagerteilen 81 der Mittelwelle 79 sind frei drehbare Streuwerkzeuge 82 gelagert. Die Streuwerkzeuge 82 sind in zwei Gruppen unterteilt, die spiegelbildlich zueinander angeordnet sind. Durch die Ausführung der Lagerung der Streuwerkzeuge 82 auf den Lagerteilen 81 werden ihre Umlaufebenen definiert. Sie bleiben bestehen, falls nicht über den Hebel 80 die Mittelwelle 79 und damit die Lagerteile 81 verdreht werden. Die Schrägstellung der Streuwerkzeuge 82 zur Fahrtrichtung F nimmt in einer regelmäßigen Stafflung nach außen hin zu. Die Streuwerkzeuge 82 weisen jeweils sternförmige Gestalt auf, wobei sie aus einzelnen an Armen 83 befestigten Zinken 84 gebildet sind. Der Antrieb der Streuwerkzeuge 82 erfolgt über Mitnehmerleisten 85, die parallel zur Mittelwelle 79 an Stegen 86 befestigt sind und sich zwischen den Armen 83 der Streuwerkzeuge 82 hindurch von einer Maschinenseite zur anderen erstrecken. Die Stege 86 sind auf zur Mittelwelle 79 koaxialen Rohren 87 befestigt, welche wiederum im Rahmen 11 gelagert sind und angetrieben werden. Die Mittelwelle 79 ist innerhalb der Rohre 87 gelagert, auf der linken Maschinenseite durch das Rohr 87 hindurchgeführt und dort durch den Hebel 80 gehaltert.
Das Halmgut wird von den Zinken 84 der Streuwerkzeuge 82 übernommen und über Kopf entgegen der Fahrtrichtung F geworfen. Dabei hat jedes Streuwerkzeug 82 einen anderen Abwurfwinkel, so daß das Halmgut in Zusammenwirkung mit dem Bodenblech 77, dem Haubenblech 75 sowie den Seitenwänden 69 breitverteilt wird. Die Abwurfwinkel sind über den Hebel 80, die Mittelwelle 79 und die Lagerteile 81 feingradig einstellbar, so daß die Breite der Halmgutschicht vor den Druckwalzen 67, 68 und damit die Breite C der Matte 10 den Erfordernissen anzupassen ist.
Der von dem Bodenblech 77, dem Haubenblech 75 sowie den Seitenwänden 69 gebildete Wurfraum 88 hat an seinem Ende sein vertikales Minimalmaß und ein horizontal und quer zur Fahrtrichtung F gesehenes Maximalmaß erreicht.
Dieses letztgenannte Maß entspricht bereits der Breite C der abzulegenden Matte 10 und wird bestimmt von dem Abstand der beiden Seitenwände 69 voneinander sowie von den eingestellten Wurfparametern an der Streuwalze 76.

Das Bodenblech 77 kann in seinem Endbereich durch einen Bandförderer oder durch Förderwalzen ersetzt werden, um eine Staubildung im Wurfraum 88 auszuschließen. Da das Halmgut vor allem entlang des Haubenbleches 75 geführt wird, kann das Bodenblech 77 auch teilweise unterbrochen ausgeführt sein, so daß der Wurfraum 88 nach unten hin offen ist.

Die Abschlußbegrenzung des Wurfraumes 88 bilden die um horizontale, quer zur Fahrtrichtung F rotierenden Druckwalzen 67, 68. Die obere Druckwalze 67 ist fest positioniert in seitlichen Lagerplatten 89 drehbeweglich gelagert.

Die untere Druckwalze 68 ist ebenfalls drehbeweglich in diesen Lagerplatten 89 gelagert, aber wird durch Federn in Richtung der oberen Druckwalze 67 mit einer Kraft beaufschlagt. Dazu ist eine Langlochführung in den seitlichen Lagerplatten 89 vorgesehen. Die Position der Druckwalze 68 paßt sich selbsttätig dem anfallenden Halmgutstrom an. Die untere Druckwalze 68 ist sehr tief in den Lagerplatten 89 gelagert, so daß in Betriebsstellung der Aufbereitungsmaschine 78 die untere Kulminationslinie der Druckwalze 68 unterhalb der von den Stoppelenden des gemähten Halmgutes gebildeten Ablagefläche liegt. Dadurch ist gesichert, daß der Halmgutstrom nach Verlassen des Preßspaltes nur einen kurzen Weg zur Ablagefläche hin zu überwinden hat und eine geschlossene Matte 10 abgelegt wird.

Der Antrieb der Aufbereitungsmaschine 78 erfolgt von der nicht in den Zeichnungen dargestellten Zapfwelle des Zugfahrzeugs 2 aus über eine Gelenkwelle 90, die mit einem Hauptgetriebe 91 verbunden ist. Das Hauptgetriebe 91 ist mittig auf einer Quertraverse 19 des Rahmens 11 aufgesetzt und weist eine Getriebeausgangswelle 92 auf, die nach links einseitig über die Länge der Quertraverse 19 hinaus verlängert ist. Dort treibt sie ein Rollenkettengetriebe 93 an, über welches die Förderwalzen 70, 71, der Hammerrotor 74 und die Auflagewalze 73 in Rotation versetzt werden. Der Hammerrotor 74 und ein Rohr 87 der Streuwalze 76 sind durch ein weiteres Rollenkettengetriebe 94 miteinander verbunden.
Über das Rohr 87 werden die Stege 86 sowie die Mitnehmerleisten 85 und damit die Streuwerkzeuge 82 in Rotation versetzt. Das Rohr 87 auf der anderen (der rechten) Maschinenseite bildet den Getriebeeingang eines Getriebes 95, von dem aus eine Welle 96 und ein weiteres Getriebe 97 angetrieben wird. Die dort zu übertragende Leistung findet Verwendung für den Antrieb der Druckwalzen 67, 68, worauf weiter unten eingegangen wird.

Über ein Rollenkettengetriebe 98, das zwischen der unteren Förderwalze 70 und der Antriebswelle der Pick-up angeordnet ist, wird die Einrichtung 5 zur Schwadaufnahme angetrieben.
Im Betrieb der dargestellten Aufbereitungsmaschine 78 werden Halmgutschwade 3 von der Einrichtung 5 vom Feld aufgenommen und von der unteren Förderwalze 70 übernommen und über Kopf in Richtung des von den Förderwalzen 70, 71 gebildeten Förderspaltes transportiert. Die Förderwalzen 70, 71 fördern das Halmgut unter Bildung einer flachen Schicht zwischen sich durch den Förderspalt hindurch und der Halmgutstrom unterläuft das Auflageorgan. Beim Unterlaufen der als Amboß wirkenden Auflagewalze 73 wird die Halmgutschicht in quer zu ihrer Vorlaufrichtung ausgerichteten, dicht aufeinanderfolgenden Einwirkungsbereichen einseitigen Hammerschlägen durch die Hammerkörper 35 ausgesetzt, wobei ein Einwirkungsbereich jeweils durch die Abmessung des auf das Halmgut auftreffenden Endes 34 eines Hammerkörpers 35 definiert ist. Somit wird die gesamte Halmgutschicht praktisch vollflächig bearbeitet, mit der Folge, daß die Kutikula der Halme und Blätter so verletzt wird, daß am Morgen eines Arbeitstages geschnittenes Halmgut bereits am Nachmittag desselben Tages eingefahren und einem Silagebehälter zugeführt werden kann.

Nach Verlassen des Hammerspaltes haben die Halme in der Halmgutmatte infolge der intensiven Hammerbearbeitung keinen nennenswerten eigenen Formwiderstand mehr. Sie werden von den Streuwerkzeugen 82 übernommen und von diesen innerhalb des Wurfraumes 88 breitverteilt. Abschließend werden die Halme in einer geschlossenen, durch die Druckwalzen 67, 68 nochmals verdichteten, kompakten Matte 10 abgelegt. Diese Matte 10 hat eine Breite C, die nahezu dem Schwadabstand A bzw. der Mähbreite A entspricht, so daß nahezu die gesamte Feld- bzw. Wiesenfläche mit Matten 10 aufbereiteten Halmgutes belegt wird. Dadurch kann die auf das Halmgut einwirkende Sonnenenergie mit hohem Wirkungsgrad zur Trocknung genutzt werden.

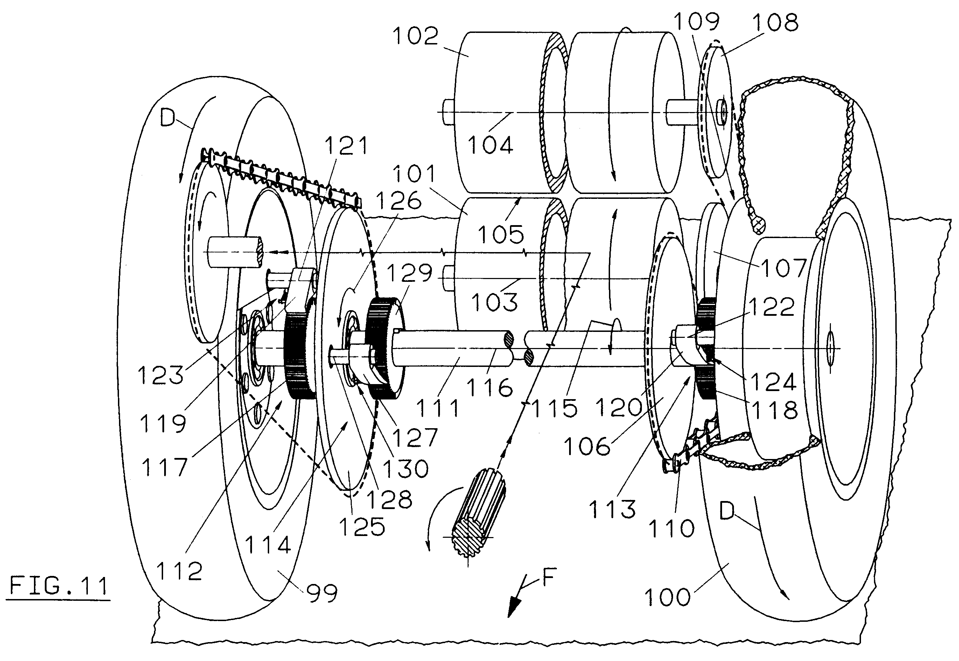

Das in der Aufbereitungsmaschine 78 zur Anwendung kommende Antriebssystem für die Druckwalzen 67, 68 wird an Hand von Fig. 11 zunächst vom Prinzip her beschrieben.
Es kann in geringfügig abgeändereter Form, beispielsweise durch Vertauschen von in unterschiedlichen etwa vertikalen Fahrtrichtungsebenen liegenden Getriebeeinheiten oder durch Umlenkung und Verlängerung von Rollenkettengetrieben durch Umlenk- und/oder Doppelkettenräder, auch bei der Aufbereitungsmaschine 78 zur Anwendung kommen. Hierbei bleibt das Prinzip des Antriebssystems jedoch unverändert. Das Antriebssystem ist auch geeignet zum Antrieb der weiter oben genannten anderen möglichen Mittel zur Halmgutverdichtung und -ablage und es wird realisiert, daß der Antrieb dieser Mittel selbsttätig selektiv entweder fahrgeschwindigkeitsabhängig über Bodenräder 13, 14 der Aufbereitungsmaschine 78 (oder auch 1; 54) oder aber mit einer Drehzahl, die von der Drehzahl eines Antriebsmotors der Aufbereitungsmaschine 78 abhängt, erfolgt.
Eine in Fig. 11 ausschnittsweise gezeigte Aufbereitungsmaschine stützt sich im Betrieb auf Bodenrädern 99, 100 zum Erdboden ab. Druckwalzen 101, 102 weisen eine glatte, aber die Mitnahme des Erntegutes begünstigende Oberfläche auf und rotieren im Betrieb gegensinnig um etwa horizontale, quer zur Fahrtrichtung F ausgerichtete Achsen 103, 104, wobei sich die Druckwalze 101 im Uhrzeigersinn dreht. Beide Druckwalzen 101, 102 sind in Seitenwänden der Aufbereitungsmaschine gelagert. Die Oberflächen der Druckwalzen 101, 102 bilden einen Preßspalt 105, dessen Breite sich dem Erntegutstrom anpaßt, indem eine der Druckwalzen 101 oder 102 in Langlöchern der Seitenwände gegen Federkraft beweglich gelagert ist.
Das Erntegut wird durch den Preßspalt 105 gefördert, dabei verdichtet und als Matte 10 auf der von den Stoppeln der vorhergehend gemähten Fläche gebildeten Ablagefläche abgelegt. Dabei soll die Relativgeschwindigkeit zwischen der Matte 10 und der Ablagefläche in oder entgegen Fahrtrichtung F möglichst nahe Null sein, um zu vermeiden, daß die Matte 10 bei der Ablage zerrissen oder gestaucht wird. Die Umfangsgeschwindigkeit der Druckwalzen 101, 102 muß daher der Fahrgeschwindigkeit angepaßt werden.
Der Antrieb der Druckwalzen 101, 102 erfolgt erfindungsgemäß bei Geradeausfahrt von beiden Bodenrädern 99, 100 aus, bei Kurvenfahrten von dem Bodenrad 99 oder 100 mit der höheren Drehzahl aus und bei Fahrt mit geringer Geschwindigkeit oder im Stillstand der Aufbereitungsmaschine von der Zapfwelle des Zugfahrzeugs 2 aus. Dadurch ist abgesichert, daß bei der Arbeit mit der Aufbereitungsmaschine unter normalen Bedingungen, also zügiger Fahrt in Fahrtrichtung F, die Mattenablage geschwindigkeitsabhängig erfolgt. Bei sehr langsamer Fahrt oder im Stillstand der Maschine würde es aber unter Umständen zu einer Staubildung in einem Stauraum vor den Druckwalzen 101, 102 kommen, da die Druckwalzen 101, 102 dann nur sehr langsam oder gar nicht rotieren würden. Aus diesem Grund erfolgt der Antrieb der Druckwalzen 101, 102, wenn die Fahrgeschwindigkeit einen Grenzwert unterschreitet, von der Zapfwelle des Zugfahrzeugs 2 aus mit einer von der Drehzahl des Antriebsmotors bestimmten Drehzahl. Das Antriebssystem paßt sich selbsttätig selektiv der jeweiligen Fahrsituation an.

Die Druckwalzen 101, 102 werden über ein Rollenkettengetriebe, das drei Kettenräder 106, 107, 108, eine Spanneinrichtung 109, die in Fig. 11 verdeckt ist, und eine Rollenkette 110 umfaßt, von einer Welle 111 aus angetrieben, auf der das Kettenrad 106 drehfest gehaltert ist. Die Welle 111 wird im Betrieb der Aufbereitungsmaschine über mindestens einen von drei Freiläufen 112, 113, 114 (Das Wort "Freilauf" wird im folgenden als Kurzbezeichnung für richtungsgeschaltete Kupplungen verwendet. Diese Bezeichnung ist als Oberbegriff gebräuchlich für beispielsweise Klinkenfreiläufe, Klemmfreiläufe, Rücklaufsperren, Reibfreiläufe, Zahnfreiläufe ...) angetrieben und rotiert in Richtung des Pfeils 115 um die Achse 116. Außen auf der Welle 111 sind die Bodenräder 99, 100 drehbar gelagert. Auch die in Fig. 11 nicht dargestellten Seitenwände sind auf der Welle 111 gelagert.
Die Freiläufe 112, 113 sind so gestaltet, daß die Drehbewegung der Bodenräder 99, 100 nur dann auf die Welle 111 übertragen wird, wenn die Aufbereitungsmaschine in Fahrtrichtung F gezogen wird und die Bodenräder 99, 100 in entsprechender Drehrichtung D rotieren. Dazu bestehen die Freiläufe 112, 113 aus je einem Klinkenrad 117, 118, das jeweils drehfest mit der Welle 111 verbunden ist und aus Klinken 119, 120, die jeweils in Verbindung mit einem Bodenrad 99, 100 stehen. Die Klinken 119, 120 sind um Achsen 121, 122 verschwenkbar außenmittig an den zugehörigen Bodenrädern 99, 100 gelagert und greifen mit ihren freien Enden, durch Federn 123, 124 belastet, in die zugehörigen Klinkenräder 117, 118 ein.
Drehen sich die Bodenräder 99, 100 mit gleicher Drehzahl in Drehrichtung D, rasten beide Klinken 119, 120 in die jeweiligen Klinkenräder 117, 118 ein. Damit wird auch die Welle 111 in eine Rotation um die Achse 116 versetzt und diese Bewegung wird auf die Druckwalzen 101, 102 übertragen. Die Kettenräder 106, 107, 108 sind in ihrer Größe so aufeinander abgestimmt, daß die Umfangsgeschwindigkeit der Druckwalzen 101, 102 etwa gleich der Umfangsgeschwindigkeit der Bodenräder 99, 100 ist.
Drehen sich die Bodenräder 99, 100 mit verschiedener Drehzahl um die Achse 116, rastet nur die Klinke 119 oder 120 des schneller drehenden Bodenrades 99 oder 100 in das zugehörige Klinkenrad 117 oder 118 ein, und die Welle 111 dreht sich mit diesem Bodenrad 99 oder 100 mit. Die Klinke 119 oder 120 am sich langsamer drehenden Bodenrad 99 oder 100 gleitet dann über die Oberfläche des zugehörigen Klinkenrades 117 oder 118, welches sich dann mit der Welle 111 schneller dreht als dieses Bodenrad 99 oder 100. Somit ist durch die Freiläufe 112, 113 die Wirkung eines Differentials gegeben.
Im weiteren ist auf der Welle 111 ein Rad 125, speziell ein Kettenrad, drehfähig gelagert, das von der Zapfwelle des Zugfahrzeugs so angetrieben wird, daß es in Richtung des Pfeils 126 rotiert.
Am Rad 125 ist eine weitere Klinke 127 um eine Achse 128 verschwenkbar gelagert. Die Klinke 127 wirkt im Zusammenhang mit einem Klinkenrad 129, welches drehfest auf der Welle 111 sitzt und mit dieser um die Achse 116 rotiert. Das Rad 125 rotiert im Betrieb der Aufbereitungsmaschine mit einer geringen Drehzahl. Wenn die Bodenräder 99, 100 mit der gleichen Drehzahl wie das Rad 125 rotieren, wird die Maschine mit einer Geschwindigkeit von zwei bis vier Kilometern pro Stunde in Fahrtrichtung F bewegt. Im Normalfall wird die Aufbereitungsmaschine mit höherer Fahrgeschwindigkeit betrieben. Dann rotieren die Bodenräder 99, 100 und damit die Klinkenräder 117, 118, 129 und die Welle 111 schneller als das Rad 125 und die Klinke 127 gleitet ohne Antriebswirkung über das Klinkenrad 129. Erst wenn sich die Bodenräder 99, 100 bei Verringerung der Fahrgeschwindigkeit langsamer als das Rad 125 drehen, rastet die Klinke 127, durch eine Feder 130 belastet, in das Klinkenrad 129 ein und die Welle 111 rotiert auch bei weiterer Verringerung der Fahrgeschwindigkeit mit der motordrehzahlabhängigen Drehzahl des Rades 125 weiter.
Damit werden auch die Druckwalzen 101, 102 mit einer motordrehzahlabhängigen Drehzahl angetrieben, und Staubildungen in der Aufbereitungsmaschine werden vermieden. Des weiteren kann die Aufbereitungsmaschine im Stillstand so lange betrieben werden, bis kein Erntegut mehr als Rückstand in der Maschine ist.

Wie weiter oben beschrieben, ist dieses Antriebssystem auch ohne bedeutende Detailänderungen für den Antrieb der Druckwalzen 67, 68 bei der Aufbereitungsmaschine 78 (entsprechend den Fig. 8 - 10) anwendbar. Die Bodenräder 13, 14 sind hier aber noch höhenverstellbar an Schwingen 131, 132 auf einer Welle 133 gelagert. Die Schwingen 131, 132 sind verschwenkbar um jeweils gestellfeste Achsen 134, 135. Das Kettenrad 106 entsprechend Fig. 11 ist um die Achse 135 drehbeweglich gelagert und wird über ein weiteres Rollenkettengetriebe 136 von der Welle 133 aus angetrieben, was außerhalb der Spurbreite der Räder 13, 14 erfolgt. Das Rad 125 entsprechend Fig. 11 ist jetzt auf der rechten Maschinenseite ebenfalls außerhalb der Spurbreite der Räder 13, 14 auf der Welle 133 gelagert und wird über ein Rollenkettengetriebe 137 mit motorabhängiger Drehzahl angetrieben. Ein Kettenrad 138 des Rollenkettengetriebes 137 ist koaxial zu der Achse 134 der Schwinge 131 angeordnet und wird von dem Getriebe 97 angetrieben.
Somit sind alle Funktionen des Antriebssystems mit den Freiläufen 112, 113, 114, wie sie zur Ausführung nach Fig. 11 beschrieben wurden, auch bei der Aufbereitungsmaschine 78 gegeben.

Die Aufbereitungsmaschinen 1; 54; 78 sind als gezogene Maschinen ausgeführt, können aber auch selbstfahrend sein bzw. mit einer Mähmaschine 4 kombiniert werden.
Durch sie wird schwadförmig zusammengeführt aufgenommenes Erntegut sehr intensiv aufbereitet. Zur Erreichung einer nahezu vollflächigen Belegung der Feldfläche mit Erntegutmatten 10 wird das Erntegut vor der Mattenbildung innerhalb der Aufbereitungsmaschinen breitverteilt. Dadurch werden Erntegutverluste nahezu vermieden und die Sonnenenergie ist mit hohem Wirkungsgrad zur Ernteguttrocknung nutzbar. Die Mattenablage erfolgt nicht nur in einer besonders großen Breite C sondern auch in sehr schonender Weise, da die Relativgeschwindigkeit zwischen der Erntegutmatte 10 und der Ablagefläche bei der Ablage nahe Null ist. Es kommt nicht zum Zerreißen oder Stauchen der Matten 10. Durch die Art der Antriebsgestaltung der Druckwalzen 67, 68; 101, 102 (bzw. auch 8, 9) werden Staubildungen innerhalb der Aufbereitungsmaschine 78 (bzw. auch 1; 54) vermieden.

## Patentansprüche

1. Verfahren zum Aufbereiten von im selben oder einem vorangegangenen Arbeitsgang gemähtem, zusammengeschwadetem Halm- oder Blattgut, dadurch gekennzeichnet, daß man
a) das gemähte Halm- oder Blattgut mit Hilfe einer an sich bekannten Einrichtung (5) zur Schwadauf- oder -übernahme einer von einem landwirtschaftlichen Zugfahrzeug (2) gezogenen und angetriebenen oder selbstfahrenden Aufbereitungsmaschine (1; 54; 78) auf- bzw. übernimmt,
b) das Halmgut in an sich bekannter Weise durch Verletzung der Kutikula der Halme und Blätter intensiv aufbereitet, wobei
c) der Halmgutstrom zeitlich vor oder nach der Aufbereitung innerhalb der Aufbereitungsmaschine (1;54;78) von einer Schwadbreite (B) auf eine Breite (C) breitverteilt wird, die annähernd einer Mähbreite (A) bzw. einem etwa gleichgroßem Schwadabstand (A) entspricht und
d) abschließend das breitverteilte, aufbereitete Halm- bzw. Blattgut in Form einer Matte (10) in Breitablage auf dem Erdboden abgelegt wird.

2. Verfahren zum Aufbereiten von im selben oder einem vorangegangenen Arbeitsgang gemähtem, zusammengeschwadetem Halm- oder Blattgut nach Anspruch 1, dadurch gekennzeichnet, daß man im Verfahrensabschnitt c) den Erntegutstrom durch das Halmgut werfende oder geführt fördernde Mittel auf eine Breite (C) verteilt, die wenigstens 80 %, vorzugsweise mehr als 90 % des durchschnittlichen Schwadabstandes (A) bzw. der Mähbreite (A) entspricht und im Verfahrensabschnitt d) eine Matte (10) dieser Breite (C) ablegt.

3. Verfahren zum Aufbereiten von im selben oder einem vorangegangenen Arbeitsgang gemähtem, zusammengeschwadetem Halm- oder Blattgut nach den Ansprüchen 1 und 2, dadurch gekennzeichnet, daß man im Verfahrensabschnitt c) das Erntegut innerhalb der Aufbereitungsmaschine (1; 54; 78) auf mehr als das Doppelte der Schwadbreite (B) breitverteilt.

4. Verfahren zum Aufbereiten von im selben oder einem vorangegangenen Arbeitsgang gemähtem, zusammengeschwadetem Halm- oder Blattgut nach den Ansprüchen 1 bis 3, dadurch gekennzeichnet, daß man das Halmgut bei Geradeausfahrt einer nach dem Verfahren arbeitenden Aufbereitungsmaschine im Verfahrensabschnitt d) als Matte (10) mittig auf dem jeweiligen Mähstreifen oder vorzugsweise von der Mähkante bzw. der noch nicht bearbeiteten Fläche nach außen versetzt auf dem Mähstreifen ablegt.

5. Aufbereitungsmaschine (1; 54; 78) zur Durchführung des Verfahrens zum Aufbereiten von im selben oder einem vorangegangenen Arbeitsgang gemähten, zusammengeschwadeten Halm- oder Blattgutes nach den Ansprüchen 1 bis 4, die von einem landwirtschaftlichen Zugfahrzeug (2) gezogen und angetrieben oder auch selbstfahrend ausgebildet sein kann, gekennzeichnet durch
- eine an sich bekannte Einrichtung (5) zur Auf- oder Übernahme eines zusammengeführten Schwades (3) aus Halm- oder Blattgut,
- eine an sich bekannte Einheit (7; 66) zur Halmgutaufbereitung,
- eine Einrichtung (6) zur Breitverteilung des Halmgutstromes innerhalb der Aufbereitungsmaschine (1; 54; 78), die vor oder nach der Einheit (7; 66) zur Halmgutaufbereitung arbeitet und durch
- Mittel zur Halmgutverdichtung und -ablage, durch die eine abschließende Breitablage des aufbereiteten Halmgutes auf nahezu der gesamten vorhergehend gemähten Fläche erfolgt.

6. Aufbereitungsmaschine (1; 54; 78) nach Anspruch 5, dadurch gekennzeichnet, daß die Einrichtung (6) zur Breitverteilung des Halmgutstromes innerhalb der Aufbereitungsmaschine (1; 54; 78) aus Mitteln besteht, die das Halmgut von der jeweils vorgeordneten Einrichtung (5) bzw. Einheit (7; 66) übernehmen und die es mit dem gewünschten Verteilungseffekt gezielt zu der jeweils nachgeordneten Einheit (7; 66) bzw. den nachgeordneten Mitteln werfen oder es geführt dorthin fördern.

7. Aufbereitungsmaschine (1; 78) nach den Ansprüchen 5 und 6, dadurch gekennzeichnet, daß die Einrichtung (6) zur Breitverteilung des Halmgutes innerhalb der Aufbereitungsmaschine (1; 78) aus einem Paar an sich bekannten, im Betrieb gegensinnig um annähernd vertikale Achsen rotierender Zinkenkreisel (20, 21) oder aus einer an sich bekannten, um eine etwa horizontale quer zur Fahrtrichtung (F) liegende Achse rotierenden Streuwalze (76) besteht und in Zusammenwirkung mit einem Haubenblech (23, 75), einem Bodenblech (18, 77) und Seitenwänden (24, 69) arbeitet, wobei diese Bauelemente einen Wurfraum (25, 88) begrenzen.

8. Aufbereitungsmaschine (1; 78) nach den Ansprüchen 5 bis 7, dadurch gekennzeichnet, daß das Bodenblech (17, 18) zumindest in seinem Endbereich nahe der Einheit (7, 66) zur Halmgutaufbereitung bzw. den Mitteln zur Halmgutverdichtung und -ablage durch einen Förderer ersetzbar ist.

9. Aufbereitungsmaschine (1; 54; 78) nach den Ansprüchen 5 bis 8, dadurch gekennzeichnet, daß die Verteilbreite des Halmgutstromes, die von der Einrichtung (6) zur Breitverteilung des Halmgutes erreicht wird, durch Verstellmittel an dieser Einrichtung (6) einstellbar ist.

10. Aufbereitungsmaschine (1; 54; 78) nach den Ansprüchen 5 bis 9, dadurch gekennzeichnet, daß die Mittel zur Halmgutverdichtung und -ablage gegensinnig angetriebene, um etwa horizontale quer zur Fahrtrichtung (F) gelegene Achsen (103, 104) rotierende, mit ihren Umfangsflächen einen Preßspalt (105) begrenzende Druckwalzen (8, 9; 67, 68; 101, 102) sind, die eine Breite aufweisen, die zumindest 80 %, vorzugsweise mehr als 90 % des durchschnittlichen Schwadabstandes (A) bzw. der Mähbreite (A) entspricht.

11. Aufbereitungsmaschine (1; 54; 78) nach den Ansprüchen 5 bis 9, dadurch gekennzeichnet, daß die Mittel zur Halmgutverdichtung und -ablage aus einem angetriebenen endlosen Ablageband und einer damit zusammenwirkenden Ablagewalze bestehen, wobei von einer Umlenkrolle des Ablagebandes oder vom Ablageband selbst und der Ablagewalze ein Preßspalt gebildet wird und diese Mittel eine Breite aufweisen, die zumindest 80 %, vorzugsweise 90 % des durchschnittlichen Schwadabstandes (A) bzw. der Mähbreite (A) entspricht.

12. Aufbereitungsmaschine (1; 54; 78) nach den Ansprüchen 5 bis 9, dadurch gekennzeichnet, daß die Mittel zur Halmgutverdichtung und -ablage aus einer rotierend angetriebenen Ablagewalze oder einem angetriebenen Ablageband bestehen, durch die die Geschwindigkeit des aufbereiteten Halmgutes verringert und dessen Ablagerichtung und -geschwindigkeit bestimmt wird, wobei diese Mittel eine Breite aufweisen, die zumindest 80 %, vorzugsweise 90 % des durchschnittlichen Schwadabstandes (A) bzw. der Mähbreite (A) entspricht.

13. Aufbereitungsmaschine (78) nach den Ansprüchen 5 bis 12, dadurch gekennzeichnet, daß die Leistungsübertragung zum Antrieb der Mittel zur Halmgutverdichtung und -ablage von zumindest einem Bodenrad (13, 14; 99, 100) der Aufbereitungsmaschine (78) aus über zumindest einen Freilauf (112, 113) erfolgt und bei Unterschreitung eines Grenzwertes der Drehzahl des Bodenrades (13, 14; 99, 100) bei geringer Fahrgeschwindigkeit der Aufbereitungsmaschine (78) eine Leistung zum Antrieb der Mittel zur Halmgutverdichtung und -ablage mit von der Drehzahl eines Antriebsmotors abhängiger Arbeitsgeschwindigkeit über einen weiteren Freilauf (114) an diese Mittel übertragen wird.

14. Aufbereitungsmaschine (78) nach den Ansprüchen 5 bis 13, dadurch gekennzeichnet, daß zwei Bodenräder (13, 14; 99, 100) und ein weiteres Rad (125) drehbar auf einer Welle (111, 133) gelagert sind und eine Baueinheit mit einer Antriebsseite jeweils eines Freilaufs (112, 113, 114) bilden, zugehörige Abtriebsseiten der Freiläufe (112, 113, 114) jeweils drehfest mit der Welle (111, 133) in Verbindung stehen, von der aus die von zumindest einem der Freiläufe (112, 113, 114) übertragene Leistung über Getriebe an die Mittel zur Halmgutverdichtung und -ablage übertragen wird.

15. Aufbereitungsmaschine (78) nach den Ansprüchen 5 bis 14, dadurch gekennzeichnet, daß das Rad (125) im Betrieb der Aufbereitungsmaschine (78) von dem Antriebsmotor oder auch beispielsweise von einer Zapfwelle aus angetrieben wird, die Drehrichtung (Pfeil 126) des Rades (125) gleich der Drehrichtung der Bodenräder (13, 14; 99, 100) bei Vorwärtsfahrt der Aufbereitungsmaschine (78) in Fahrtrichtung (F) ist und die von der Drehzahl des Antriebsmotors abhängige Drehzahl des Rades (125) den Grenzwert bestimmt, von dem abhängig ist, ob die Leistungsübertragung von zumindest einem Bodenrad (13, 14; 99, 100) aus über zumindest einen der Freiläufe (112, 113) oder von dem Antriebsmotor bzw. der Zapfwelle aus über das Rad (125) und den Freilauf (114) an die Mittel zur Halmgutverdichtung und -ablage erfolgt.

16. Aufbereitungsmaschine (78) nach den Ansprüchen 5 bis 15, dadurch gekennzeichnet, daß die Leistungsübertragung an die Mittel zur Halmgutverdichtung und -ablage von den Bodenrädern (13, 14; 99, 100) aus über die zugehörigen Freiläufe (112, 113), die Welle (111, 133) und das Getriebe dann erfolgt, wenn die Drehzahl der Bodenräder (13, 14; 99, 100) größer ist als die Drehzahl des Rades (125) und die Leistung bei Kurvenfahrten der Aufbereitungsmaschine (78) von dem Bodenrad (13, 14; 99, 100) mit der größeren Drehzahl aus übertragen wird, wenn diese größer ist als die Drehzahl des Rades (125).

17. Aufbereitungsmaschine (78) nach den Ansprüchen 5 bis 16, dadurch gekennzeichnet, daß die Abtriebsseiten der Freiläufe (112, 113, 114) drehfest mit der Welle (111, 133) verbundene Klinkenräder (117, 118, 129) sind und die Antriebsseiten der Freiläufe (112, 113, 114) aus Klinken (119, 120, 127) bestehen, die verschwenkbar außermittig an den Bodenrädern (13, 14; 99, 100) bzw. am Rad (125) gelagert sind, mit diesen umlaufen und bei Leistungsübertragung federbelastet in das jeweils zugehörige Klinkenrad (117, 118, 129) eingreifen und damit die Welle (111, 133) sowie die Mittel zur Halmgutverdichtung und -ablage antreiben.

## Claims

1. A method of processing stalk or leaf crop mown and swathed in the same or in a previous process, characterised in that:
a) the mown stalk or leaf crop is picked up or taken over by means of a per se known unit (5) for picking up or taking over swathes and in a processing machine (1; 54, 78) which is self-propelled or driven and pulled by an agricultural tractor vehicle (2),
b) in per se known manner, the stalk crop is intensively processed by damaging the cuticular in the stalks and leaves, whereby
c) prior to or following processing in the processing machine (1; 54; 78), the stream of stalk crop is widespread from a swathe width (B) to a width (C) which corresponds approximately to a mowing width (A) or a swathe spacing (A) which is of substantially the same size, and
d) finally the widespread processed stalk or leaf crop is deposited on the ground in the form of a wide mat (10).

2. A method of processing stalk or leaf crop mown and swathed in the same or in a previous process according to claim 1, characterised in that in procedural step (c), the flow of crop is spread by means of guided conveyance or throwing the stalk crop to a width (C) which corresponds to at least 80% and preferably more than 90% of the average swathe spacing (A) or mowing width (A), a mat (10) of this width (C) being deposited in procedural step (d).

3. A method of processing stalk or leaf crop mown and swathed according to claims 1 and 2, characterised in that inside the processing machine (1; 54; 78), the harvested crop is widespread to more than twice the swathe width (B).

4. A method of processing stalk or leaf crop mown and swathed according to claims 1 to 3, characterised in that during straight-ahead travel of a processing machine which functions in accordance with the method of the invention, the stalk crop is, in procedural step (d), deposited as mat 10 centrally on the relevant mowing strip or preferably is deposited on the mowing strip in a pattern offset outwardly from the area which has not yet been worked.

5. A processing machine (1; 54; 78) for carrying out the method of processing stalk or leaf crop mown and swathed according to claims 1 to 4 and which may be driven or drawn by an agricultural tractor vehicle (2) or may even be self-propelled, characterised by
- a per se known unit (5) for picking up or taking over a gathered-together swathe (3) of stalk or leaf crop,
- a per se known unit (7; 66) for processing stalk crop,
- a unit (6) for spreading wide the stream of stalk crop within the processing machine (1; 54, 78) which works upstream or downstream of the unit (7; 66) for processing stalk crop, and by
- means of compacting and depositing stalk crop which results in a final broad deposit of processed stalk crop on virtually the entire previously mowed area.

6. A processing machine (1; 54; 78) according to claim 5, characterised in that the unit (6) for spreading the stalk crop widely within the processing machine (1;54;78) consists of means which take over the stalk crop from the relevant preceding unit (5) or unit (7; 66) and, with the desired distribution effect, throw it in controlled manner to the respective subsequent unit (7; 66) or the following means or convey it thereto in guided manner.

7. A processing machine (1; 78) according to claims 5 and 6, characterised in that the unit (6) for spreading the stalk crop widely within the processing machine (1; 78) consists of a pair of per se known tined rotors (20, 21) rotating in opposite directions about approximately vertical axes or a per se known spreader roller (76) rotating about a substantially horizontal axis disposed crosswise to the direction of travel (F) and operating in conjunction with a cover plate (23; 75), a bottom plate (18; 77) and side walls (24; 69), these components defining an ejector space (25, 88).

8. A processing machine (1; 78) according to claims 5 to 7, characterised in that at least the end portion of the bottom plate (17, 18), close to the unit (7; 66) for processing stalk crop or the means for compacting and depositing stalk crop, can be replaced by a conveyor.

9. A processing machine (1; 54, 78) according to claims 5 to 8, characterised in that the distribution width of the stream of stalk crop achieved by the unit (6) for spreading wide the stalk crop can be adjusted by adjustment means on the said unit (6).

10. A processing machine (1; 54; 78) according to claims 5 to 9, characterised in that the means of compacting and depositing stalk crop are presser rollers (8, 9; 67, 68; 101, 102) driven in opposite directions and rotating about substantially horizontal axes (103, 104) disposed crosswise to the direction of travel (F) and of which the peripheral surfaces define a pressing gap (105), said rollers being of a width corresponding to at least 80% and preferably more than 90% of the average swathe gap (A) or mowing width (A).

11. A processing machine (1; 54, 78) according to claims 5 to 9, characterised in that the means of compacting and depositing stalk crop consist of a driven endless delivery belt and a delivery roller co-operating therewith, a roller for changing the direction of the delivery belt or the delivery belt itself and the delivery roller constituting a pressing gap, said means having a width corresponding to at least 80% and preferably 90% of the average swathe gap (A) or mowing width (A).

12. A processing machine (1; 54; 78) according to claims 5 to 9, characterised in that the means of compacting and depositing stalk crop consist of a rotatingly driven delivery roller or a driven delivery belt by which the speed of the processed stalk crop can be reduced and its direction and rate of delivery can be determined, said means having a width corresponding to at least 80% and preferably 90% of the average swathe gap (A) or mowing width (A).

13. A processing machine (78) according to claims 5 to 12, characterised in that the transfer of power to the drive for the means of compacting and depositing stalk crop is effected by at least one ground-contacting wheel (13, 14; 99, 100) of the processing machine (78) and via at least one freewheel arrangement (112, 113) and in that if the rotary speed of the ground-contacting wheel (13; 14; 99, 100) falls short of a limit value when the processing machine (78) is travelling at a low speed, power to drive the means of compacting and depositing stalk crop at a working speed dependent upon the rotary speed of a drive motor is transmitted to said means via a further freewheel arrangement (114).

14. A processing machine (78) according to claims 5 to 13, characterised in that two ground-contacting wheels (13, 14; 99, 100) and a further wheel (125) are rotatably mounted on a shaft (111, 133) and form one structural unit with a drive side of a respective free-wheel arrangement (112, 113, 114), associated output sides of the freewheel arrangements (112, 113, 114) being respectively and rotationally rigidly connected to the shaft (111, 133) from which power transmitted by at least one of the freewheel arrangements (111, 113, 114) is transmitted by gears to the means of compacting and depositing stalk crop.

15. A processing machine (78) according to claims 5 to 14, characterised in that when the processing machine (78) is operating, the wheel (125) is driven by the driving motor or even for example by a power take-off shaft, the direction of rotation (arrow 126) of the wheel (125) being the same as the direction of rotation of the ground-contacting wheels (13, 14; 99, 100) during forwards travel of the processing machine (78) in the direction of travel (F), the rotary speed (125) which is dependent upon the rotary speed of the drive motor determining the limit value which decides whether the transmission of power is carried out by at least one ground-contacting wheel (13, 14; 99, 100) via at least one of the freewheel arrangements (111, 113) or by the drive motor or power take-off shaft via the wheel (125) and the freewheel arrangement (114) to the means of compacting and depositing the stalk crop.

16. A processing machine (78) according to claims 5 to 15, characterised in that the transmission of power to the means of compacting and depositing stalk crop is effected by the ground-contacting wheels (13, 14; 99, 100) via the associated freewheel arrangements (112, 113), the shaft (111, 133) and the gear mechanism, when the rotary speed of the ground-contacting wheels (13, 14; 99, 100) is greater than the rotary speed of the wheel (125) and the power when the processing machine (78) is negotiating bends is transmitted from the ground-contacting wheel (13, 14; 99, 100) at the greater speed when this is greater than the speed of the wheel (125).

17. A processing machine (78) according to claims 5 to 16, characterised in that the output sides of the free-wheel arrangements (112, 113, 114) are ratchet wheels (117, 118, 119) which are rotationally rigidly connected to the shaft (111, 133), the drive sides of the freewheel arrangements (112, 113, 114) consisting of detents (119, 120, 127) which are pivotally mounted eccentrically on the ground-contacting wheels (13, 14; 99, 100) or the wheel (125), rotate with these and, when transmitting power, are spring loaded and engage the respectively associated ratchet wheel (117, 118, 119) and thus drive the shaft (111, 133) and also the means of compacting and depositing stalk crop.

## Revendications

1. Procédé de traitement de produit en forme de tiges ou de feuilles, directement fauché au cours de la même opération ou fauché au cours d'une opération précédente et regroupé en andains, caractérisé en ce que,
a) on prend ou reprend le produit en forme de tiges ou de feuilles, fauché, à l'aide d'une installation (5) connue en soi pour la reprise ou le transfert d'andains par une machine de traitement (1 ; 54 ; 78) tirée par un tracteur agricole (2) et entraînée par celui-ci ou automotrice,
b) on traite le produit en tiges, de manière connue en soi en abîmant la cuticule des tiges et des feuilles par un traitement intensif,
c) le flux de produit en tiges étant réparti en largeur à partir d'une largeur d'andains (B) à une largeur (C), chronologiquement avant ou après son traitement dans la machine de traitement (1 ; 54 ; 78), cette largeur (C) correspondant sensiblement à la largeur de fauche (A) ou à l'intervalle (A) de dimensions sensiblement identiques entre les andains et,
d) puis, on dépose le produit en forme de tiges ou de feuilles, traité, réparti en largeur, sous la forme d'une nappe (10), suivant une couche étalée en largeur sur le sol.

2. Procédé de traitement de produit en forme de tiges ou de feuilles, directement fauché, ou fauché au cours d'une opération précédente et regroupé en andains, selon la revendication 1, caractérisé en ce que dans l'opération c) on distribue le flux de produit récolté par le moyen qui transfert le produit en tiges en le projetant ou en le guidant, sur une largeur (C) qui représente au moins 80 % et de préférence plus de 90 % de l'intervalle (A) des andains de produit coupé ou de la largeur de coupe (A) et dans l'étape d) on dépose une nappe 10 correspondant à cette largeur (C).

3. Procédé de traitement de produit en forme de tiges ou de feuilles, directement fauché, ou fauché au cours d'une opération précédente et regroupé en andains, selon les revendications 1 et 2, caractérisé en ce que dans l'étape de procédé c) on répartit en largeur le produit récolté à l'intérieur de la machine de traitement (1 ; 54 ; 78), sur plus du double de la largeur (B) d'un andain.

4. Procédé de traitement de produit en forme de tiges ou de feuilles, directement fauché, ou fauché au cours d'une opération précédente et regroupé en andains, selon les revendications 1 à 3, caractérisé en ce que en circulation en ligne droite d'une machine de traitement travaillant selon le procédé, on dépose le produit en forme de tiges, selon l'étape de procédé d), sous la forme d'une nappe d) au milieu de la bande de fauche respective ou de préférence en la décalant du bord de la bande de fauche ou de la surface non encore traitée, vers l'extérieur sur la bande de fauche.

5. Machine de traitement (1 ; 54 ; 78) pour la mise en oeuvre du procédé de traitement de produit en forme de tiges ou de feuilles, regroupé en andains, fauché au cours de la même opération ou au cours d'une opération précédente, selon l'une des revendications 1 à 4, tirée par un tracteur agricole (2) et entraînée par celui-ci ou automotrice, caractérisée en ce qu'elle comprend,
- une installation (5) connue en soi pour reprendre ou transférer un andain (3) de produit en tiges ou en feuilles,
- un ensemble connu en soi (6 ; 66) de traitement du produit en tige,
- une installation (6) d'étalement en largeur du flux de produit en tiges à l'intérieur de la machine de traitement (1 ; 54 ; 78), qui travaille en amont ou en aval de l'ensemble (7, 66) de traitement de produit en tiges et,
- des moyens pour compacter le produit en tiges et le déposer, qui assurent l'étalement en largeur final du produit en tiges, traité, sur pratiquement toute la surface préalablement fauchée.

6. Machine de traitement (1 ; 54 ; 78) selon la revendication 5, caractérisée en ce que l'installation (6) d'étalement en largeur du flux de produit en tiges à l'intérieur de la machine de traitement (1 ; 54 ; 78) comprend des moyens qui reprennent le produit en tiges de l'installation (5) ou de l'ensemble (7 ; 77) en amont et le projettent avec l'effet de distribution souhaité, de manière dirigée vers l'ensemble (7 ; 77) respectivement en aval ou les moyens en aval ou guident le produit vers ces moyens.

7. Machine de traitement (1 ; 54 ; 78) selon les revendications 5 et 6, caractérisée en ce que l'installation (6) d'étalement en largeur du produit en tiges dans la machine de traitement (1 ; 78) se compose d'une paire de rotors à dents (20, 21) logés dans la machine de traitement (1 ; 78), tournant en fonctionnement, en sens opposé autour d'axes sensiblement verticaux ou d'un cylindre d'épandage (76) connu en soi, tournant autour d'un axe sensiblement horizontal, transversal à la direction de circulation (F), et coopère avec une tôle de capot (23 ; 75), une tôle de fond (18 ; 78) et des parois latérales (24, 29), ces éléments constructifs délimitant une chambre de projection (25 ; 88).

8. Machine de traitement (1 ; 78) selon les revendications 5 à 7, caractérisée en ce que la tôle de fond (17, 18) est remplacée au moins dans sa zone d'extrémité à proximité de l'ensemble (7 ; 66) de traitement du produit en tiges ou des moyens de compactage et de dépôt du produit, par un moyen de transfert.

9. Machine de traitement (1 ; 78) selon les revendications 5 à 8, caractérisée en ce que la largeur d'épandage du flux de produit en tige que l'on obtient en amont de l'installation (6) d'étalement en largeur du produit est réglable par des moyens de réglage au niveau de cette installation (6).

10. Machine de traitement (1 ; 54 ; 78) selon les revendications 5 à 9, caractérisée en ce que les moyens de compactage et de dépôt du produit en tiges sont entraînés en sens opposé, en rotation autour d'axes (103, 104) situés sensiblement horizontalement transversalement par rapport à la direction de déplacement (F) et les surfaces périphériques des cylindres de compression (8, 9 ; 67, 68 ; 101, 102) délimitent un intervalle de compression (105) ayant une largeur correspondant au moins à 80 % et de préférence à plus de 90 % de l'écart moyen (A) des andains ou de la largeur de fauche (A).

11. Machine de traitement (1 ; 54 ; 78) selon les revendications 5 à 9, caractérisée en ce que les moyens de compactage et de dépôt du produit en tiges se composent d'une bande sans fin de dépôt, entraînée, et d'un cylindre de dépôt coopérant avec celle-ci, un cylindre de renvoi de la bande de dépôt ou la bande de dépôt elle-même et le cylindre de dépôt formant un intervalle de compression et ces moyens ont une largeur représentant au moins 80 % et de préférence 90 % de l'écart moyen (A) des andains ou de la largeur de coupe (A).

12. Machine de traitement (1 ; 54 ; 78) selon les revendications 5 à 9, caractérisée en ce que les moyens de compactage et de dépôt du produit en forme de tiges se composent d'un cylindre de dépôt entraîné en rotation ou d'une bande de dépôt, entraînée, qui réduisent la vitesse du produit traité et définissent la direction et la vitesse de dépôt du produit, ces moyens ayant une largeur correspondant à au moins 80 % et de préférence à 90 % de l'écart moyen (A) des andains ou de la largeur de coupe (A).

13. Machine de traitement (78) selon les revendications 5 à 12, caractérisée en ce que la transmission de puissance pour entraîner les moyens de compactage et de dépôt du produit comprennent au moins une roue de roulement (13, 14 ; 99, 100) de la machine de traitement (78) avec au moins une roue libre (112, 113) et en cas de dépassement d'une valeur limite de la vitesse de rotation de la roue de roulement (13, 14 ; 99, 100), pour une vitesse de circulation faible de la machine de traitement (78), la puissance servant à l'entraînement des moyens de compactage et de dépôt du produit est assurée à une vitesse de fonctionnement dépendant de la vitesse de rotation d'un moteur, transmise à ces moyens par l'intermédiaire d'une autre roue libre (114).

14. Machine de traitement (78) selon les revendications 5 à 13, caractérisée en ce que deux roues de roulement (13, 14 ; 99, 100) et au moins une autre roue (125) sont montées à rotation sur un axe (113, 133) et forment un ensemble avec du côté de l'entraînement chaque fois une roue libre (112, 113, 114), les côtés de sortie correspondants des roues libres (112, 113, 114) étant chaque fois reliés solidairement à l'axe (111, 133) et la puissance transmise par au moins l'une des roues libres (112, 113, 114) est transmise aux moyens de compactage et de dépôt des produits par l'intermédiaire d'une transmission.

15. Machine de traitement (78) selon les revendications 5 à 14, caractérisée en ce que lorsque la machine de traitement (78) fonctionne, la roue (125) est entraînée par le moteur ou également par exemple à partir d'une prise de force, la direction de rotation (flèche 126) de la roue (125) étant la même que la direction de rotation des roues de roulement (13, 14 ; 99, 100) lorsque la machine de traitement (78) avance dans la direction (F) et la vitesse de rotation de la roue (125) dépendant de la vitesse de rotation du moteur définit la valeur limite selon laquelle la transmission de puissance se fait à partir d'au moins l'une des roues de roulement (13, 14 ; 99, 100) ou par au moins l'une des roues libres (112, 113) ou à partir du moteur ou la prise de force par la roue (125) et la roue libre (114) vers les moyens de compactage et de dépôt du produit.

16. Machine de traitement (78) selon les revendications 5 à 15, caractérisée en ce que la transmission de puissance vers les moyens de compactage et de dépôt du produit à partir des roues de roulement (13, 14 ; 99, 100) se fait par des roues libres correspondantes (112, 113), l'axe (111, 133) et la transmission, seulement lorsque la vitesse de rotation des roues de roulement (13, 14 ; 99, 100) est supérieure à la vitesse de rotation de la roue (125) et la puissance transmise lorsque la machine de traitement (78) circule en courbe provient de la roue de roulement (13, 14 ; 99, 100) tournant à la vitesse de rotation la plus grande lorsque celle-ci est supérieure à la vitesse de rotation de la roue (125).

17. Machine de traitement (78) selon les revendications 5 à 16, caractérisée en ce que les côtés de sortie des roues libres (112, 113, 114) sont des roues à cliquet (117, 118, 129) solidaires en rotation de l'axe (111, 133) et les côtés d'entraînement des roues libres (112, 113, 114) sont formés de cliquets (119, 120, 127) fixés de manière pivotante de façon excentrée sur les roues de roulement (13, 14 ; 99, 100) ou sur la roue (125) et tournent avec celles-ci et sont chargés par ressort pour la transmission de la puissance, pour venir en prise avec la roue à cliquet (117, 118, 129) respective et entraîner ainsi l'axe (111, 133) ainsi que les moyens de compactage et de dépôt du produit.
